# EUROPEAN PATENT SPECIFICATION

(11) **EP 4 254 812 B1**
(45) Date of publication and mention of the grant of the patent: **25.03.2026**
(21) Application number: 21905326.1
(22) Date of filing: 29.10.2021
(51) Int. Cl.: H04B 1/40, H04B 1/04

(54) **RADIO FREQUENCY TRANSCEIVING SYSTEM AND COMMUNICATION DEVICE**
FUNKFREQUENZSENDEEMPFANGSSYSTEM UND KOMMUNIKATIONSVORRICHTUNG
SYSTÈME D'ÉMISSION-RÉCEPTION RADIOFRÉQUENCE ET DISPOSITIF DE COMMUNICATION

(30) Priority: 16.12.2020 CN 202011487442
(43) Date of publication of application: 04.10.2023
(73) Proprietor: GUANGDONG OPPO MOBILE TELECOMMUNICATIONS CORP., LTD., Dongguan, Guangdong 523860 (CN)
(72) Inventor: WANG, Guolong, Dongguan, Guangdong 523860 (CN)
(74) Representative: Mewburn Ellis LLP
(86) International application number: PCT/CN2021/127212
(87) International publication number: WO 2022/127397

(56) References cited:
- CN-A- 108 282 182
- CN-A- 108 872 925
- CN-A- 109 951 207
- CN-A- 110 174 649
- CN-A- 111 294 081
- CN-U- 208 608 986
- CN-U- 211 630 163
- US-A1- 2018 331 714
- ANONYMOUS: "All devices connected to the mobile Internet require RF front-end chips", 9 June 2020 (2020-06-09), XP055943266, Retrieved from the Internet <URL:www.sohu.com/a/400596621_472928> [retrieved on 20220715]
- ANONYMOUS: "All devices connected to the mobile Internet require RF front-end chips", 9 June 2020 (2020-06-09), XP055943266, Retrieved from the Internet <URL:www.sohu.com/a/400596621_472928>
- ANONYMOUS: "Lansus Technologies Unveils an Complete Solution for 5G RF Front End", 3 July 2020 (2020-07-03), XP055943268, Retrieved from the Internet <URL:www.mwrf.net/news/products/2020/26968.html> [retrieved on 20220715]
- JEON JOOYOUNG; OH JUNHEE; JUNG JOOMIN; PAEK SEUNGWON: "Multimode multiband power amplifier module integrated duplexer for mobile applications", 2017 IEEE INTERNATIONAL SYMPOSIUM ON RADIO-FREQUENCY INTEGRATION TECHNOLOGY (RFIT), IEEE, 30 August 2017 (2017-08-30), pages 110 - 112, XP033155115, DOI: 10.1109/RFIT.2017.8048219
- HUANG ZHENSONG, ET AL.: "A High Integrated RF Receive Module", MODERN INFORMATION TECHNOLOGY, vol. 1, no. 4, 25 October 2017 (2017-10-25), pages 58 - 61, XP055943217, ISSN: 2096-4706

## Description

### TECHNICAL FIELD

This disclosure relates to the field of radio frequency (RF) technology, particularly to an RF transceiving system and a communication device.

### BACKGROUND

Only background information related to the disclosure is provided, which do not necessarily constitute existing exemplary technology.

With the development and progress of technology, 5^{th}-generation mobile communication technology (5G) is gradually applied to electronic devices. A communication frequency of 5G is higher than a communication frequency of 4^{th}-generation mobile communication technology (4G). Generally, multiple radio frequency (RF) front-end modules are disposed in a receive channel of an RF system to cooperate with an antenna array to increase a channel capacity of the RF system, which is costly and occupies a large area of a substrate.

CN211630163U provides a radio frequency circuit and an electronic device, and relates to the technical field of communication, the radio frequency circuit comprises a radio frequency transceiver, and a first radio frequency module and a second radio frequency module connected with the radio frequency transceiver; wherein the first radio frequency module comprises a first transmitting circuit and a second transmitting circuit of different frequency bands; the first receiving circuit and the second receiving circuit have different frequency bands; the third receiving circuit and the fourth receiving circuit have different frequency bands; wherein the first antenna switch, the first transmitting circuit and the second transmitting circuit are connected with the first antenna switch through a first combiner, the first receiving circuit and the second receiving circuit are connected with the first antenna switch through a second combiner, and the third receiving circuit and the fourth receiving circuit are connected with the first antenna switch through a third combiner. According to the scheme of the utility model, circuits of different working frequency bands are aggregated by adopting the combiner and the first antenna switch, so that the layout area and the insertion loss can be reduced.
"All devices connected to the mobile Internet require RF front-end chips" relates to introductions of an RF chip and an RF front-end chip.
CN111294081A relates to a radio frequency system and electronic equipment. The radio frequency system comprises a radio frequency transceiver, a radio frequency processing circuit, aselector switch module, a first antenna, a second antenna, a third antenna and a fourth antenna; the radio frequency processing circuit comprises a first transmitting module, a second transmitting module, a first receiving module, a second receiving module, a first duplexer, a second duplexer, a first selection switch and a first filtering module. A radio frequency system works in a non-independent networking mode; the first antenna is used for transmitting a first low-frequency band and receiving a main set of the first low-frequency band; the second antenna is used for transmitting in a second low-frequency band and receiving in a main set of the second low-frequency band; the third antenna is used for receiving in a diversity manner in the second low-frequency band, the fourth antennais used for receiving in a diversity manner in a first low-frequency band, and the first filter is used for filtering frequency bands except the first low-frequency band. According to the embodiment of the invention, the system can ensure the reliability of an uplink signal.

### SUMMARY

The invention is set out in the appended set of claims. A radio frequency (RF) transceiving system and a communication device are provided according to implementations of the disclosure.

One or more implementations of the disclosure are elaborated in accompanying drawings and illustrations below. Other features, purposes, and advantages of the disclosure are illustrated clearly according to the description, the accompanying drawings, and the claims.

### BRIEF DESCRIPTION OF THE DRAWINGS

To describe technical solutions in implementations of the disclosure or the related art more clearly, the following will give a brief introduction to accompanying drawings required for describing implementations or the related art. Apparently, the accompanying drawings described hereinafter are merely some implementations of the disclosure. Based on these drawings, those of ordinary skill in the art can also obtain other drawings without creative effort.
FIG. 1a is a schematic diagram of a first transmission application scenario of channel-information feedback of a communication device provided in an implementation.
FIG. 1b is a schematic diagram of a second transmission application scenario of channel-information feedback of a communication device provided in an implementation.
FIG. 2 is a schematic mode diagram illustrating sounding reference signal (SRS) antenna switching in an implementation.
FIG. 3 is a schematic structural diagram of a first radio frequency (RF) transceiving system in an implementation.
FIG. 4 is a schematic structural diagram of a first RF LNA-front-end module (LFEM) device in an implementation.
FIG. 5 is a schematic structural diagram of a second RF LFEM device in an implementation.
FIG. 6 is a schematic structural diagram of a second RF transceiving system in an implementation.
FIG. 7 is a schematic structural diagram of a third RF LFEM device in an implementation.
FIG. 8 is a schematic structural diagram of a third RF transceiving system in an implementation.
FIG. 9 is a schematic structural diagram of a fourth RF LFEM device in an implementation.
FIG. 10a is a schematic structural diagram of a fifth RF LFEM device in an implementation.
FIG. 10b is a schematic structural diagram of a sixth RF LFEM device in an implementation.
FIG. 11 is a schematic structural diagram of a fourth RF transceiving system in an implementation.
FIG. 12 is a schematic structural diagram of a seventh RF LFEM device in an implementation.
FIG. 13 is a schematic structural diagram of a fifth RF transceiving system in an implementation.
FIG. 14 is a schematic structural diagram of an eighth RF LFEM device in an implementation.
FIG. 15 is a schematic structural diagram of a sixth RF transceiving system in an implementation.
FIG. 16a is a schematic diagram of package pins of the RF LFEM device in FIG. 7.
FIG. 16b is a schematic diagram of package pins of the RF LFEM device in FIG. 10.
FIG. 16c is a schematic diagram of package pins of the RF LFEM device in FIG. 12.
FIG. 16d is a schematic diagram of package pins of the RF LFEM device in FIG. 14.

### DETAILED DESCRIPTION

In order to facilitate the understanding of the disclosure and to make features and advantages of the disclosure apparent and easy to be understood, implementations of the disclosure are elaborated below with reference to accompanying drawings. In the following illustration, many specific details are described to facilitate complete understanding of the disclosure, and preferred implementations of the disclosure are illustrated in the drawings. However, the disclosure can be implemented in many different forms and is not limited to implementations described herein. On the contrary, the purpose of providing these implementations is to enable the disclosure to be understood more thorough and comprehensive. The disclosure can be implemented in many ways other than those described herein, and those skilled in the art can make similar improvements without violating connotations of the disclosure, so that the disclosure is not limited by specific implementations disclosed below.

Furthermore, terms "first" and "second", and the like are used for descriptive purposes only, and should not be understood as indicating or implying relative importance or implicitly indicating the number of technical features referred to herein. Therefore, features limited by "first" and "second", and the like can explicitly or implicitly include at least one such feature. In the illustration of the disclosure, "multiple" or "a plurality of' refers to "at least two", such as two, three, etc., unless otherwise explicitly specified. In the illustration of the disclosure, "several" refers to "at least one", such as one, two, etc., unless otherwise explicitly specified.

A radio frequency (RF) transceiving system related in implementations of the disclosure can be applied to a communication device with wireless communication functions. The communication device may be handheld devices, in-vehicle devices, wearable devices, computing devices or other processing devices connected with wireless modems, and various forms of user equipment (UE) (e.g., mobile phones), mobile stations (MS), etc. For convenience of illustration, the above-mentioned devices are collectively referred to as the communication device. A network device may include a base station, an access point (AP), or the like.

The RF transceiving system in implementations of the disclosure can support the 5^{th}-generation mobile communication technology (short for 5G or 5G technology). 5G is the latest generation of cellular mobile communication technology, and is also an extension of 4G, 3G, and 2G systems. Performance goals of 5G are high data rates, reduced latency, energy savings, reduced costs, increased system capacity, and large-scale device connectivity. 5G has two modes, which are standalone access (NA) mode and non-standalone access (NSA) mode. In the NSA mode, 5G control signaling is anchored to 4G base stations, while in the SA MODE, 5G base stations are directly connected to the 5G core network, and the control signaling does not depend on the 4G network.

5G networks support beamforming technology, which allows for directional transmission to communication devices. To transmit directionally, the base station needs to first detect a position of a communication device and a quality of a transmission path, etc., such that the base station can allocate resources more accurately to each communication device.

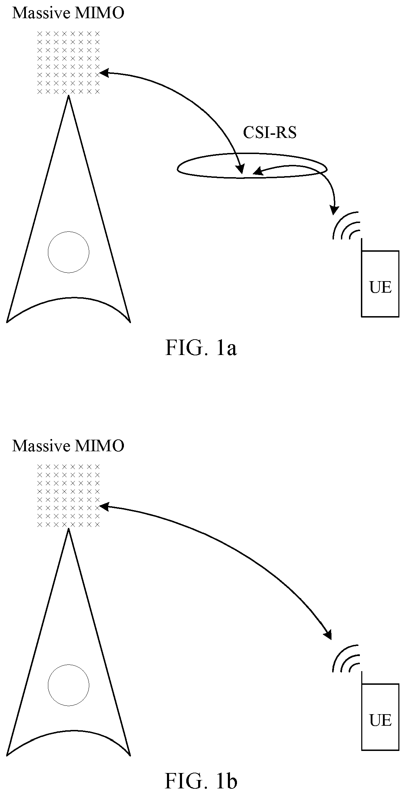

Currently, there are two different modes of channel information feedback of communication devices, i.e., precoding matrix indicator (PMI) mode and sounding reference signal (SRS) mode, with signal transmission processes illustrated in FIGs. 1a and 1b. As defined by the standard, PMI is a function that all 5G communication devices need to support, while SRS is an optional function. In the PMI mode, after measurements of a terminal, the terminal estimates channel information and resource requirements in combination with various quantization algorithms, and reports a result to a base station, and the base station analyses the result based on a pre-set mechanism. In the SRS mode, the terminal is allowed to report the channel information directly to the base station based on channel reciprocity, which is more accurate.

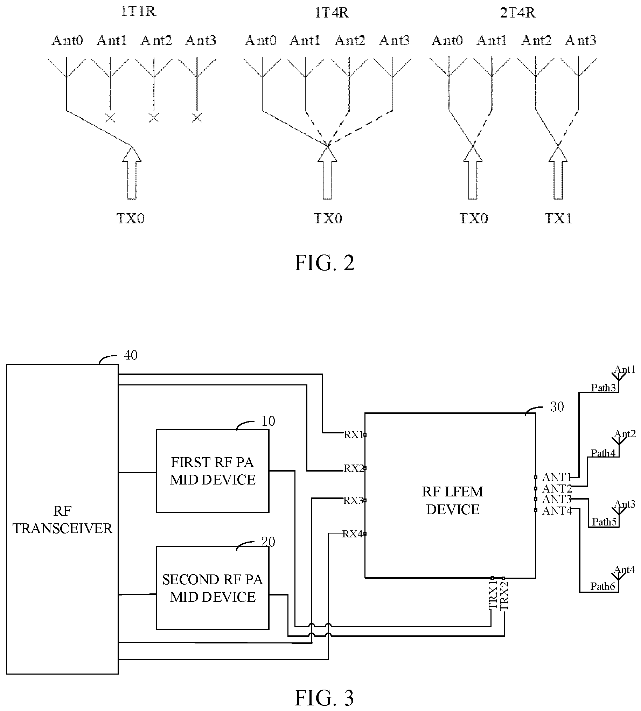

Communication devices transmit SRS information to enable base stations to detect terminal positions and channel quality. SRS antenna switching is illustrated in FIG. 2, and elaborated as follows.

First, 1T1R: report information to a base station fixedly through a first antenna, and SRS in-turn transmitting is not supported.

Second, 1T4R: a first antenna to a fourth antenna transmit SRS information in turn, and only one antenna is selected for transmission each time. Currently, this mode is used in NSA.

Third, 2T4R: the first antenna to the fourth antenna transmit SRS information in turn, and two antennas are selected for transmission simultaneously each time. Currently, this mode is used in SA.

In the SRS mode, the more antennas that participate in transmitting reference signals, the more accurate the channel estimation, and the higher the achievable rate. With the same number of antennas, channel estimation can be completed faster in the SA mode than that in the NSA mode, thus improving network channel estimation speed.

An RF transceiving system is provided in implementations of the disclosure. As illustrated in FIG. 3, in an implementation, the RF transceiving system includes an RF transceiver 40, an antenna group, an RF low noise amplifier (LNA)-front-end module (LFEM) device 30, a first RF power amplifier module including duplexers (PA Mid) device 10, and a second RF PA Mid device 20.

Exemplarily, the RF transceiver 40 may include a transmitter (e.g., transmitter TX) and a receiver (e.g., receiver RX), or may include only the receiver (e.g., receiver RX) or only the transmitter (e.g., transmitter TX). The RF transceiver 40 can be used to implement frequency conversion between RF signals and baseband signals, or/and to implement frequency conversion between signals in different frequency bands, etc.

The antenna group includes at least a first antenna Ant1, a second antenna Ant2, a third antenna Ant3, and a fourth antenna Ant4. The first antenna Ant1, the second antenna Ant2, the third antenna Ant3, and the fourth antenna Ant4 can be used to receive and transmit RF signals in frequency bands N41, N77, and N79. That is, the first antenna Ant1, the second antenna Ant2, the third antenna Ant3, and the fourth antenna Ant4 all can support 5G new radio (NR) signals. In an implementation, each of the antennas in the antenna group may be a directional antenna or a non-directional antenna. Exemplarily, each of the antennas in the antenna group may be formed by any appropriate type of antenna. For example, each of the antennas in the antenna group may include antennas with resonating elements formed by at least one of the following antenna structures: array antenna, loop antenna, patch antenna, slot antenna, helical antenna, strip antenna, monopole antenna, or dipole antenna, etc. Different types of antennas can be used for combinations of different frequency bands of RF signals.

In implementations of the disclosure, the RF LFEM device 30 is understood as a low noise amplifier front-end module, and configured for dual-channel reception of RF signals in at least two frequency bands. In implementations of the disclosure, the RF LFEM device 30 is also configured for transmission of RF signals, and thus the RF LFEM device 30 can support 4*4 multiple input multiple output (MIMO) function in conjunction with the first antenna Ant1, the second antenna Ant2, the third antenna Ant3, and the fourth antenna Ant4. The RF LFEM device 30 is provided with a first antenna port ANT1, a second antenna port ANT2, a third antenna port ANT3, a fourth antenna port ANT4, and multiple receive ports RX such as RX1, RX2, RX3, and RX4 configured to connect the RF transceiver 40.

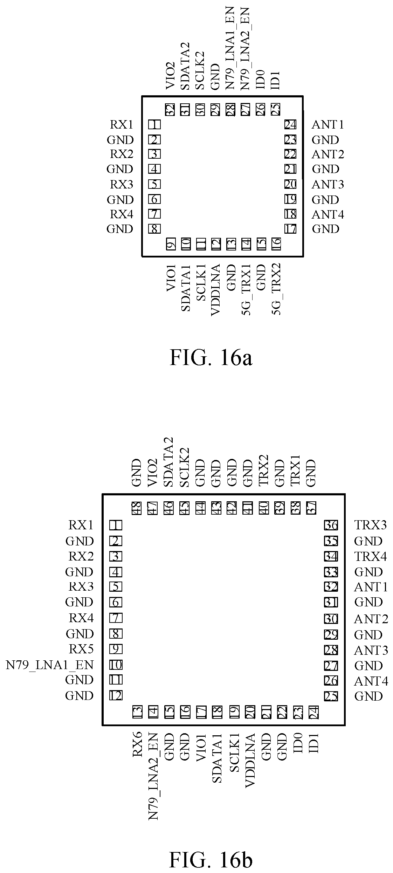

As illustrated in FIG. 16a, in an implementation, the RF LFEM device 30 can be understood as a packaged chip. The first antenna port ANT 1, the second antenna port ANT2, the third antenna port ANT3, the fourth antenna port ANT4, transmit/receive ports TRX, and the receive ports RX configured in the device can be understood as RF pin terminals of the RF LFEM device 30, and are configured to connect various external devices. Specifically, the first antenna port ANT1 can be configured to connect the first antenna Ant1. The second antenna port ANT2 can be configured to connect the second antenna Ant2. The third antenna port ANT3 can be configured to connect the third antenna Ant3. The fourth antenna port ANT4 can be configured to connect the fourth antenna Ant4. Each of the receive ports RX can be configured to connect the RF transceiver 40. Multiple transmit/receive ports TRX can be configured to connect the first RF PA Mid device 10 and the second RF PA Mid device 20. Exemplarily, an RF signal received by the first antenna Ant1 can be input to the RF LFEM device 30 via the first antenna port ANT1, and an RF signal processed by the RF LFEM device 30 can also be transmitted through the first antenna Ant1 via the first antenna port ANT1. An RF signal received by the second antenna Ant2 can be input to the RF LFEM device 30 via the second antenna port ANT2, and an RF signal processed by the RF LFEM device 30 can also be transmitted through the second antenna Ant2 via the second antenna port ANT2. An RF signal received by the third antenna Ant3 can be input to the RF LFEM device 30 via the third antenna port ANT3, and an RF signal processed by the RF LFEM device 30 can also be transmitted through the third antenna Ant3 via the third antenna port ANT3. An RF signals received by the fourth antenna Ant4 can be input to the RF LFEM device 30 via the fourth antenna port ANT4, and an RF signal processed by the RF LFEM device 30 can also be transmitted through the fourth antenna Ant4 via the fourth antenna port ANT4. RF signals received by the RF LFEM device 30 via the first antenna port ANT 1, the second antenna port ANT2, the third antenna port ANT3, and the fourth antenna port ANT4 can be processed and output to the RF transceiver 40 via the receive ports RX, to realize reception control for RF signals. RF signals output from the RF transceiver 40 are received and processed by the first RF PA Mid device 10 or the second RF PA Mid device 20, and the processed RF signals can be received by the RF LFEM device 30 via the transmit/receive ports TRX, to enable the RF LFEM device 30 to transmit the received RF signals.

An RF signal may be a 5G signal, such as a 5G signal in frequency band N41, an RF signal in frequency band N77 (N78), an RF signal in frequency band N79, etc. Specifically, N41 has a working frequency band of 496MHz-2690MHz, N77 has a working frequency band of 3.3GHz-4.2GHz, N78 has a working frequency band of 3.3GHz-3.8GHz, and N79 has a working frequency band of 4.4GHz-5.0GHz. It should be noted that the working frequency band of N77 covers the working frequency band of N78. That is, when the RF LFEM device 30 can support transmission/reception of RF signals in N77, the RF LFEM device 30 can also support transmission/reception of RF signals in N78.

The first RF PA Mid device 10 is configured for amplification and transmission/reception control for an RF signal in multiple frequency bands. That is, the first RF PA Mid device 10 can realize reception and transmission control for an RF signal in multiple frequency bands. Exemplarily, the first RF PA Mid device 10 is a packaged chip. The first RF PA Mid device 10 is provided with a receive channel for receiving an RF signal and a transmit channel for transmitting an RF signal, to achieve transmission/reception control for an RF signal. Similarly, the second RF PA Mid device 20 is also configured to support transmission/reception and amplification control for an RF signal in multiple frequency bands. That is, the second RF PA Mid device 20 can realize reception and transmission control for an RF signal in multiple frequency bands. Exemplarily, the second RF PA Mid device 20 is a packaged chip. The second RF PA Mid device 20 is provided with a receive channel for receiving an RF signal and a transmit channel for transmitting an RF signal, to achieve transmission/reception control for an RF signal.

MIMO technology refers to that multiple transmit antennas and receive antennas are used respectively on a transmit port and a receive port, to fully utilize spatial resources. Multi-transmit and multi-receive is realized through multiple antennas, such that a system channel capacity can be significantly enhanced without increasing spectrum resources and an antenna transmission power. MIMO technology shows obvious advantages, thereby being regarded as core technology for next-generation mobile communication. Terminals and base stations can form 2*2 MIMO or 4*4 MIMO. When reception performance is tested according to TTL protocol, four receive channels are all connected with an instrument. The four channels form MIMO downlinks, and all of the four channels receive signals transmitted by an uplink base station, thereby improving performance of a receiver.

The above RF transceiving system and communication device achieve dual-channel reception of RF signals in at least two frequency bands through the RF LFEM device 30. Two receive channels for a signal in each frequency band are integrated and packaged into the same chip, such that a substrate area occupied by each device can be saved, physical space can be freed up for performance optimization of other modules, and costs are reduced. The RF LFEM device 30 can realize 4*4 MIMO function in 2T4R mode in conjunction with the antenna group, the first RF PA Mid device 10, and the second RF PA Mid device 20, thereby enhancing the system channel capacity and improving the accuracy and efficiency of channel estimation.

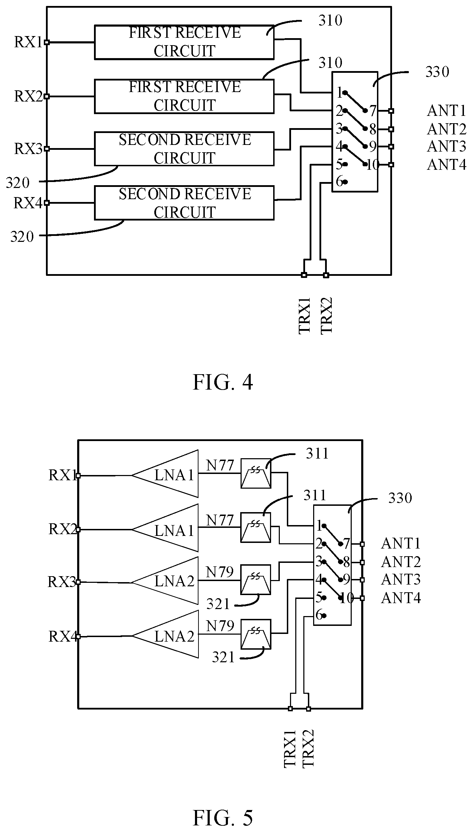

As illustrated in FIG. 4, in an implementation, the RF LFEM device 30 includes two first receive circuits 310, two second receive circuits 320, and a first switch unit 330. Multiple first ends of the first switch unit 330 are connected with input ends of the two first receive circuits 310, input ends of the two second receive circuits 320, and the multiple transmit/receive ports TRX in one-to-one correspondence. Four second ends of the first switch unit 330 are connected with the first antenna port ANT1, the second antenna port ANT2, the third antenna port ANT3, and the fourth antenna port ANT4 in one-to-one correspondence, which is configured to enable the RF LFEM device 30 to transmit/receive an RF signal through the first antenna port ANT1, the second antenna port ANT2, the third antenna port ANT3, and the fourth antenna port ANT4, further configured to enable the RF LFEM device 30 to transmit an RF signal transmitted by the RF transceiver 40 through the transmit/receive ports TRX, to selectively conduct a connection between a receive channel of the RF LFEM device 30 and any of the first antenna port ANT1, the second antenna port ANT2, the third antenna port ANT3, the fourth antenna port ANT4, or selectively conduct a connection between a transmit channel of the RF LFEM device 30 and any of the first antenna port ANT1, the second antenna port ANT2, the third antenna port ANT3, the fourth antenna port ANT4. The receive channel of the RF LFEM device 30 can be understood as a first receive channel between the first antenna port ANT1 and any receive port RX or transmit/receive port TRX, a second receive channel between the second antenna port ANT2 and any receive port RX or transmit/receive port TRX, a third receive channel between the third antenna port ANT3 and any receive port RX or transmit/receive port TRX, and a fourth receive channel between the fourth antenna port ANT4 and any receive port RX or transmit/receive port TRX. The transmit channel of the RF LFEM device 30 can be understood as a transmit channel between any antenna port and any transmit/receive port TRX.

The input ends of the two first receive circuits 310 and the input ends of the two second receive circuits 320 are connected with four of the multiple first ends of the first switch unit 330 in one-to-one correspondence. Output ends of the two first receive circuits 310 and output ends of the two second receive circuits 320 are connected with four receive ports RX in one-to-one correspondence. The first receive circuit 310 is configured to receive and amplify an RF signal in a first frequency band, and the second receive circuit 320 is configured to receive and amplify an RF signal in a second frequency band. Exemplarily, if the first antenna receives an RF signal in the first frequency band, the RF signal can be input to the first switch unit 330 through the first antenna port ANT1, and then the first switch unit 330 switches to conduct any first receive circuit 310. After the RF signal is amplified by the first receive circuit 310, the RF signal is output to the RF transceiver 40 via one receive port. If the first antenna receives an RF signal in the second frequency band, the RF signal can be input to the first switch unit 330 through the first antenna port ANT1, and then the first switch unit 330 switches to conduct any second receive circuit 320. After the RF signal is amplified by the second receive circuit 320, the RF signal is output to the RF transceiver 40 through one receive port. The same applies to other antennas.

As illustrated in FIG. 5, in an implementation, the first receive circuit 310 includes a first LNA LNA1. An input end of the first LNA LNA1 is connected with one first end of the first switch unit 330, and an output end of the first LNA LNA1 is connected with one receive port RX. The first LNA LNA1 is configured to amplify a received RF signal in the first frequency band. The second receive circuit 320 includes a second LNA LNA2. An input end of the second LNA LNA2 is connected with another first end of the first switch unit 330, and an output end of the second LNA LNA2 is connected with another receive port RX. The second LNA LNA1 is configured to amplify a received RF signal in the second frequency band.

As illustrated in FIG. 5, in an implementation, the first receive circuit 310 further includes a first filter unit 311, and the second receive circuit 320 further includes a second filter unit 321. The first filter unit 311 can be disposed in a receive channel for an RF signal in the first frequency band and the second filter unit 321 can be disposed in a receive channel for an RF signal in the second frequency band, and the first filter unit 311 and the second filter unit 312 each is configured to filter a received RF signal. The first filter unit 311 is disposed at a front end of the first switch unit 330, that is, the first filter unit 311 is disposed between the input end of the first LNA LNA1 and the first switch unit 330. The second filter unit 321 is disposed at the front end of the first switch unit 330, that is, the second filter unit 321 is disposed between the input end of the second LNA LNA2 and the first switch unit 330. In an implementation, the RF signal in the first frequency band is a 5G signal in frequency band N77, and the RF signal in the second frequency band is a 5G signal in frequency band N79. It can be understood that the RF signal in the first frequency band may be a 5G signal in frequency band N79, and the RF signal in the second frequency band may be a 5G signal in frequency band N77.

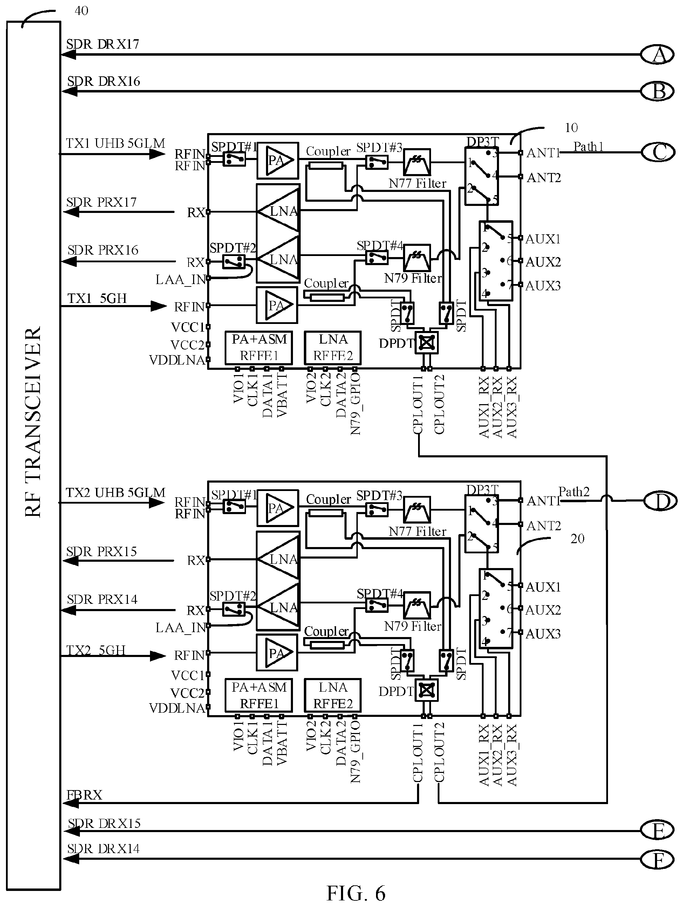

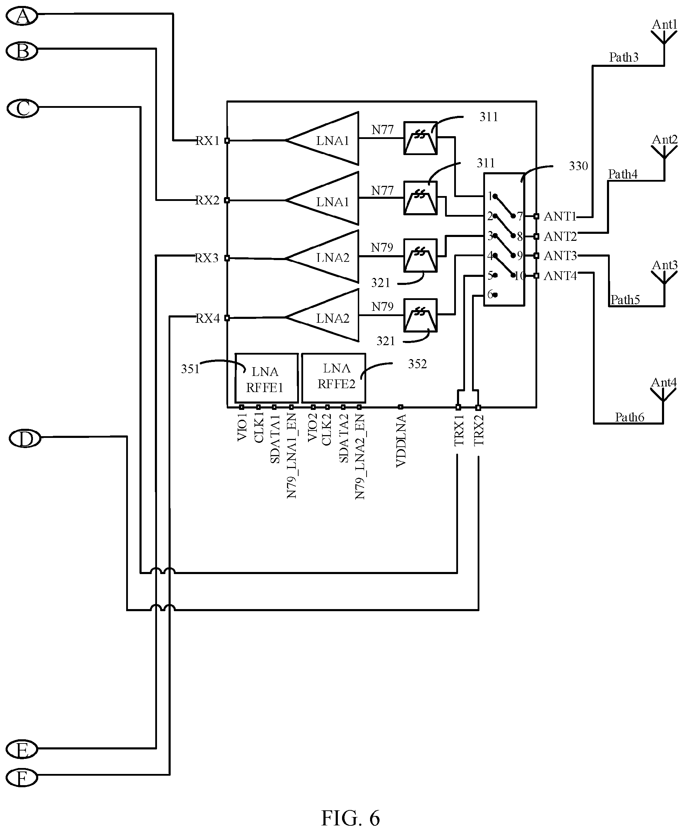

As illustrated in FIG. 6, in an implementation, the first RF PA Mid device 10 is provided with an RF transmit port RFIN, an RF receive port RXOUT, and an RF antenna port ANT. The RF transmit port RFIN of the first RF PA Mid device 10 is configured to connect the RF transceiver 40, so as to receive an RF signal in the first frequency band and an RF signal in the second frequency band transmitted by the RF transceiver 40. The RF receive port RXOUT of the first RF PA Mid device 10 is configured to connect the RF transceiver 40, so as to output a received RF signal in the first frequency band and a received RF signal in the second frequency band to the RF transceiver 40. The RF antenna port ANT of the first RF PA Mid device 10 is connected with the first transmit/receive port TRX1 and is configured for transmission/reception of an RF signal in the first frequency band and an RF signal in the second frequency band. The second RF PA Mid device 20 is provided with an RF transmit port RFIN, an RF receive port RXOUT, and an RF antenna port ANT. The RF transmit port RFIN of the second RF PA Mid device 20 is configured to connect the RF transceiver 40, so as to receive an RF signal in the first frequency band and an RF signal in the second frequency band transmitted by the RF transceiver 40. The RF receive port RXOUT of the second RF PA Mid device 20 is configured to connect the RF transceiver 40, so as to output a received RF signal in the first frequency band and a received RF signal in the second frequency band RF signal to the RF transceiver 40. The RF antenna port ANT of the second RF PA Mid device 20 is connected with the second transmit/receive port TRX2 and is configured for transmission/reception of an RF signal in the first frequency band and an RF signal in the second frequency band.

Based on implementations described above, the RF transceiving system can support 4*4 MIMO function and SRS function in 4-antenna 2T4R. Exemplarily, referring to FIG. 6, working principles of 4*4 MIMO function for N77 are analyzed as follows.

### TX0 channel:

A transmitted RF signal is output to the RF transmit port RFIN of the first RF PA Mid device 10 via a port TX1 UHB 5GLM of the RF transceiver 40, is transmitted to a power amplifier PA through an RF switch SPDT#1, and reaches an RF switch SPDT#3 after being amplified by the power amplifier PA. The RF signal is transmitted to a single-port through the RF switch SPDT#3, reaches an RF switch DP3T after being filtered by a filter, and is transmitted to Path1 through the RF switch DP3T. The RF signal reaches the first switch unit 330 (RF switch 4P6T) via the first transmit/receive port TRX1 of the RF LFEM device 30, is transmitted to Path3 through the first switch unit 330, and is output via the first antenna port ANT1 to the first antenna Ant1 to be transmitted out.

### TX1 channel:

A transmitted RF signal is output to the RF transmit port RFIN of the second RF PA Mid device 20 via a port TX2 UHB 5GLM of the RF transceiver 40, is transmitted to a power amplifier PA through an RF switch SPDT# 1, and reaches an RF switch SPDT#3 after being amplified by the power amplifier PA. The RF signal is transmitted to a single-port through the RF switch SPDT#3, reaches an RF switch DP3T after being filtered by a filter, and is transmitted to Path2 trough the RF switch DP3T. The RF signal reaches the first switch unit 330 (RF switch 4P6T) via the second transmit/receive port TRX2 of the RF LFEM device 30, is transmitted to Path5 through the first switch unit 330, and is output via the third antenna port ANT3 to the third antenna Ant3 to be transmitted out.

### PRX channel:

A received RF signal enters from the first antenna Ant1, passes through Path3 to the first antenna port ANT1 of the RF LFEM device 30, is transmitted to the first transmit/receive port TRX1 through the first switch unit 330 (RF switch 4P6T), and passes through Path1 to the RF antenna port ANT of the first RF PA Mid device 10. The RF signal is transmitted to a contact 1 through the RF switch DP3T in the first RF PA Mid device 10, and reaches the RF switch SPDT#3 after being filtered by the filter. The RF signal is transmitted to a receive channel through the RF switch SPDT#3, reaches an RF receive port RXOUT after being amplified by an LNA, and enters the RF transceiver 40 via a port SDR PRX17.

### DRX channel:

A received RF signal enters from the second antenna Ant2, passes through Path4 to the second antenna port ANT2 of the RF LFEM device 30, and is transmitted to the contact 1 through the first switch unit 330 (RF switch 4P6T). The RF signal reaches a receive port RX1 after being filtered by the first filter unit 311 and amplified by the first LNA LNA1, and enters the RF transceiver 40 via a port SDR DRX17.

### PRX MIMO channel:

A received RF signal enters from the third antenna Ant3, passes through Path5 to the third antenna port ANT3 of the RF LFEM device 30, is transmitted to the second transmit/receive port TRX2 via the first switch unit 330 (RF switch 4P6T), and passes through Path2 to the RF antenna port ANT of the second RF PA Mid device 20. The RF signal is transmitted to the contact 1 through the RF switch DP3T in the second RF PA Mid device 20, and reaches to the RF switch SPDT#3 after being filtered by a filter. The RF signal is transmitted to a receive channel through the RF switch SPDT#3, reaches an RF receive port RXOUT after being amplified by an LNA, and enters the RF transceiver 40 via a port SDR PRX15.

### DRX MIMO channel:

A received RF signal enters from the fourth antenna Ant4, passes through Path6 to the fourth antenna port ANT4 of the RF LFEM device 30, and is transmitted to a contact 3 via the first switch unit 330 (RF switch 4P6T). The RF signal reaches a receive port RX2 after being filtered by the first filter unit 311 and amplified by the first LNA LNA1, and enters the RF transceiver 40 via a port SDR DRX16.

Referring to FIG. 6, working principles of SRS function for N77 are analyzed.

A transmitted RF signal is output to the RF transmit port RFIN of the first RF PA Mid device 10 via the port TX1 UHB 5GLM of the RF transceiver 40, is transmitted to the power amplifier PA through the RF switch SPDT# 1, and reaches the RF switch SPDT#3 after being amplified by the power amplifier PA. The RF signal is transmitted to the single-port via the RF switch SPDT#3, reaches the RF switch DP3T after being filtered by the filter, and is transmitted to Path1 through the RF switch DP3T. The RF signal reaches the first transmit/receive port TRX1 of the RF LFEM device 30, is transmitted to the first antenna port ANT1 through the first switch unit 330 (RF switch 4P6T), and reaches the first antenna Ant1 through Path3 to be transmitted out.

The transmitted RF signal passes through Path1 to the first switch unit 330, is transmitted to Path4 through the first switch unit 330, and is output through the second antenna Ant2.

A transmitted RF signal is output to the RF transmit port RFIN of the second RF PA Mid device 20 via the port TX2 UHB 5GLM of the RF transceiver 40, is transmitted to the power amplifier PA through the RF switch SPDT# 1, and reaches the RF switch SPDT#3 after being amplified by the power amplifier PA. The RF signal is transmitted to the single-port through the RF switch SPDT#3, reaches the RF switch DP3T after being filtered by the filter, and is transmitted to Path2 through the RF switch DP3T. The RF signal reaches the second transmit/receive port TRX2 of the RF LFEM device 30, is transmitted to the third antenna port ANT3 through the first switch unit 330, and reaches the third antenna Ant3 through Path5 to be transmitted out.

The transmitted RF signal passes through Path2 to the first switch unit 330, is transmitted to Path6 through the first switch unit 330, and is output through the fourth antenna Ant4.

The SRS function for N79 is similar to the SRS function for N77, and is not repeated here. Specific SRS path configuration is illustrated in Table 1.

**Table 1, specific SRS path configuration**

| | N77 | N79 |
|---|---|---|
| Channel0 | Path1->Path3 | Path1->Path3 |
| Channel1 | Path1->Path4 | Path1->Path4 |
| Channel2 | Path2->Path5 | Path2->Path5 |
| Channel3 | Path2->Path6 | Path2->Path6 |

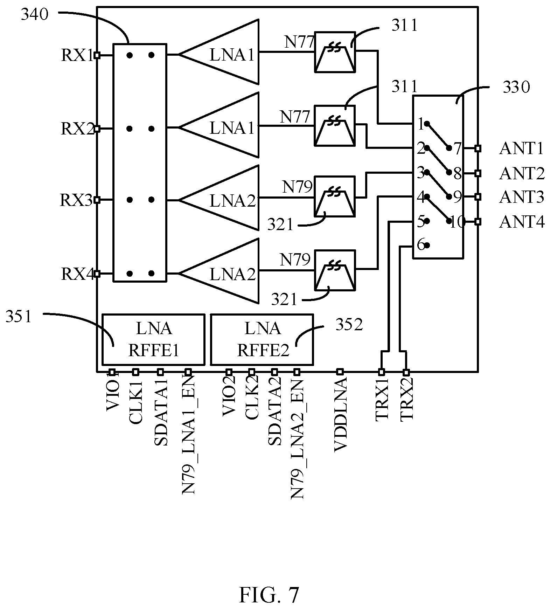

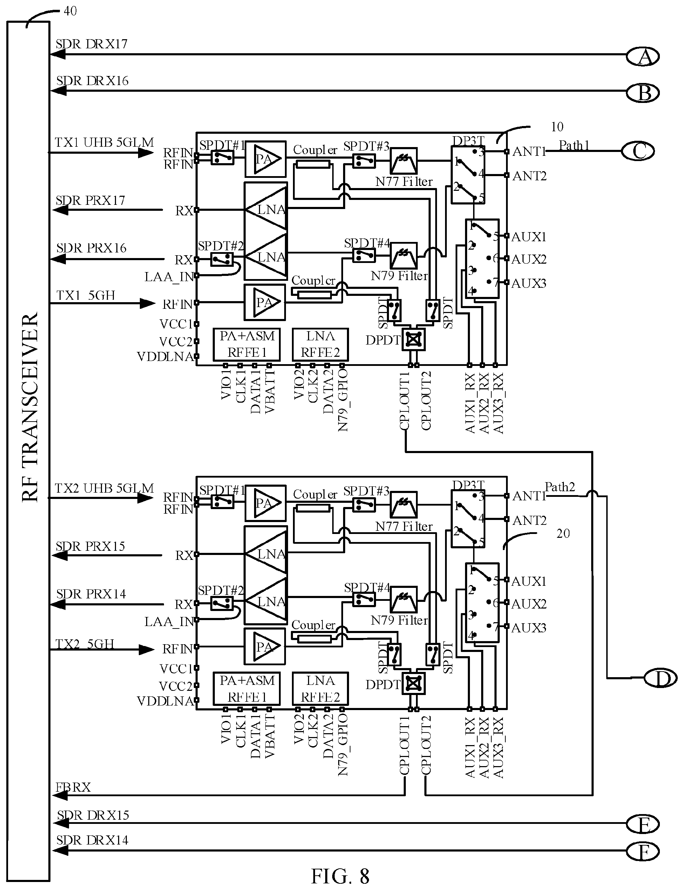

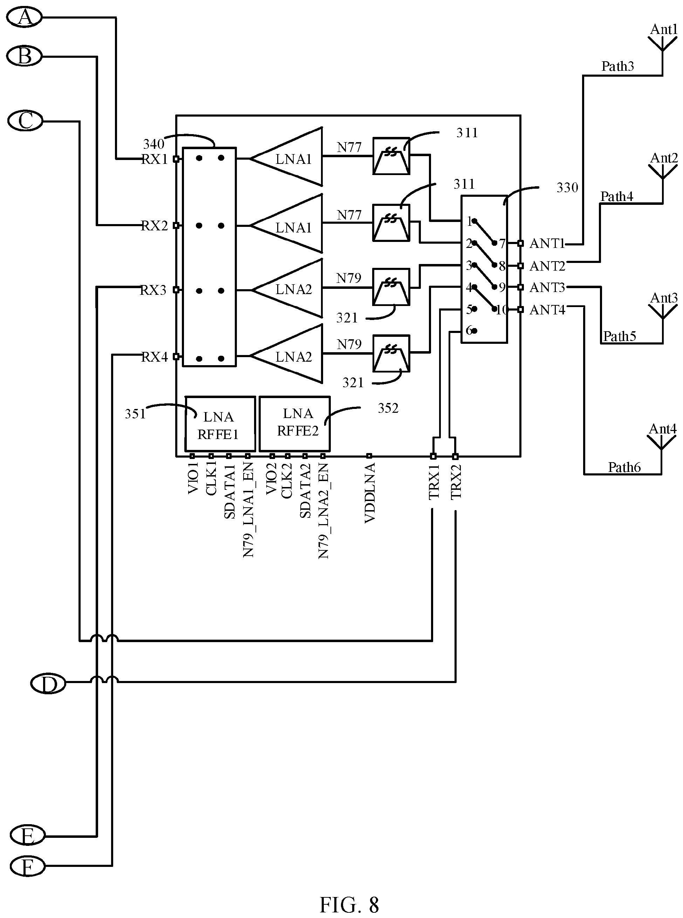

As illustrated in FIGs. 7 and 8, in an implementation, the RF LFEM device 30 further includes a fifth switch unit 340 configured to switch to any receive port to output a received RF signal. Specifically, four first ends of the fifth switch unit 340 are connected with the four receive ports in one-to-one correspondence, and four second ends of the fifth switch unit 340 are connected with the output ends of the two first receive circuits 310 and the output ends of the two second receive circuits 320 in one-to-one correspondence.

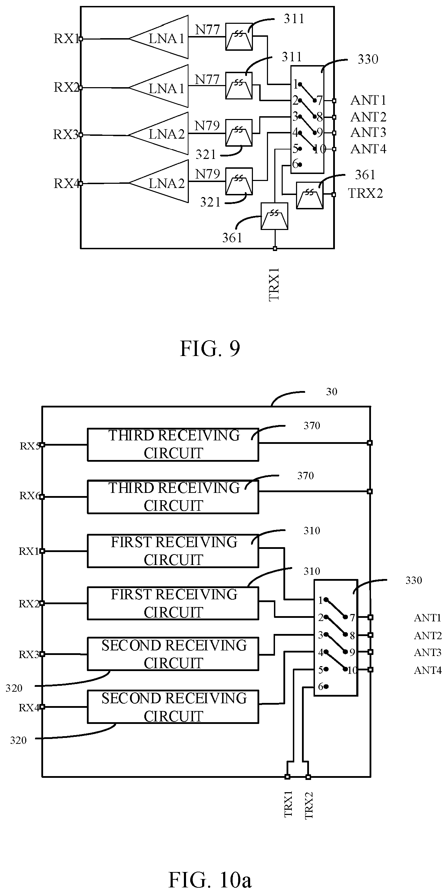

As illustrated in FIG. 9, in an implementation, the RF LFEM device 30 further includes multiple fourth filter units 361. Each of the multiple fourth filter units 361 is disposed between the front end of the first switch unit 330 and each transmit/receive port, and is configured to filter a received RF signal. Exemplarily, if the number (i.e., quantity) of transmit/receive ports is two, the number of fourth filter units 361 is two, and the two fourth filter units are disposed between the two transmit/receive ports and the front end of the first switch unit 330 respectively.

Referring to the RF transceiving system illustrated in FIGs. 6 and 8, dual-channel reception of dual-band RF signals is realized through the RF LFEM device 30, and four receive channels are integrated and packaged into the same chip, such that a substrate area occupied by each device is saved, physical space is freed up for performance optimization of other modules, and costs are reduced. 4*4 MIMO function in the 2T4R mode can be realized by the RF LFEM device 30 cooperating with the antenna group, the first RF PA Mid device 10, and the second RF PA Mid device 20, such that the system channel capacity is enhanced, and the accuracy and efficiency of channel estimation are improved. In the RF transceiving system illustrated in FIG. 6, an internal space of the RF LFEM device 30 can be further saved, costs can be further reduced, and complexity of internal logic control of the RF LFEM device 30 can be simplified.

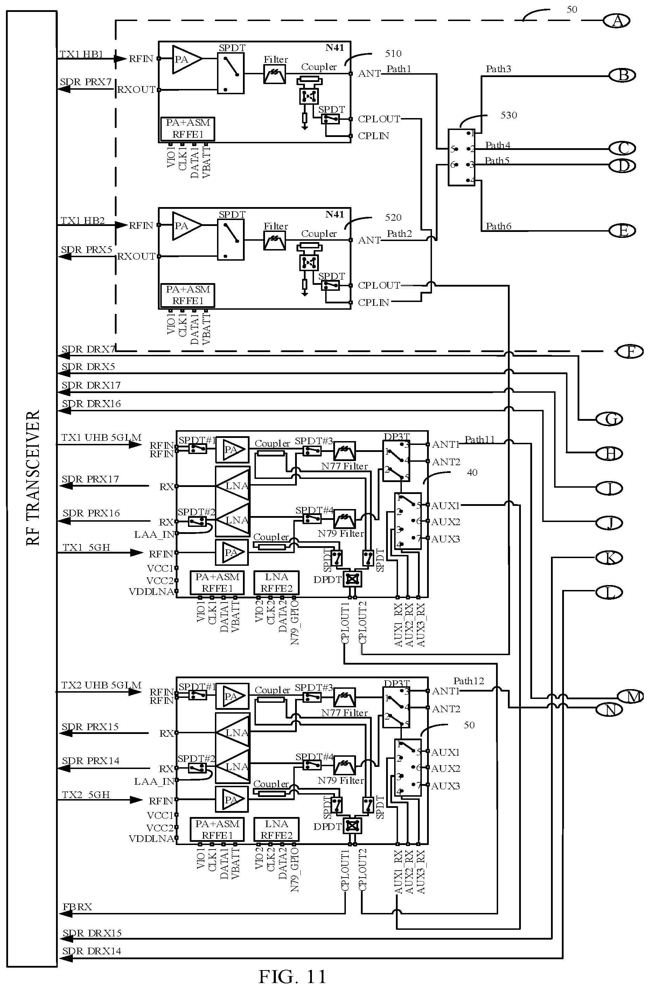

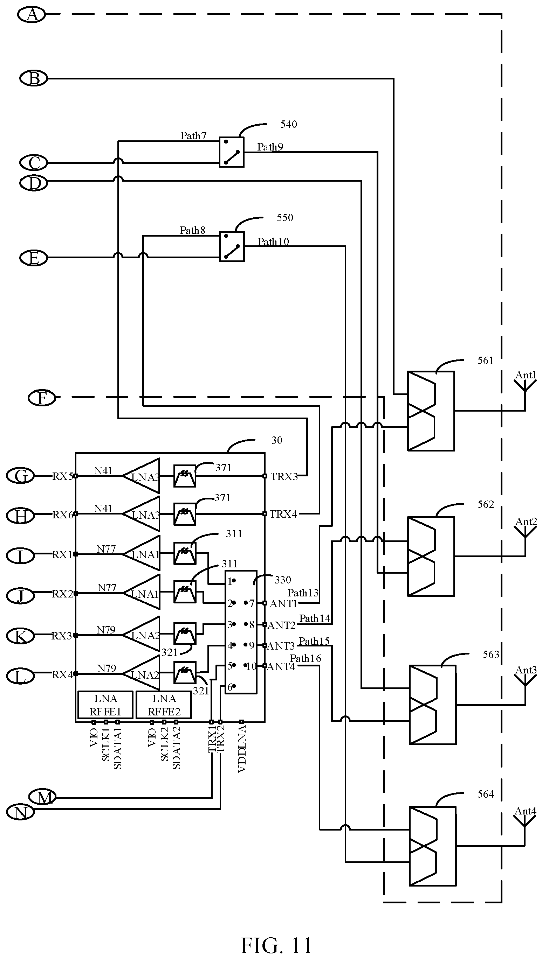

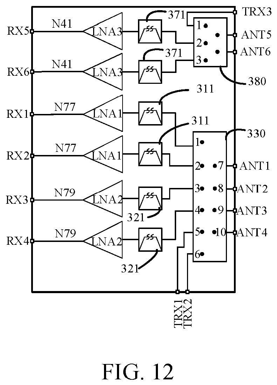

As illustrated in FIG. 10a, in an implementation, the RF LFEM device 30 further includes two third receive circuits 370. Each of the two third receive circuits 370 is configured to receive and amplify an RF signal in a third frequency band. Referring to FIGs. 11 and 12, the RF transceiving system further includes a transmission/reception selection module 50. The transmission/reception selection module 50 is connected with the RF transceiver 40, the RF LFEM device 30, the first antenna, the second antenna, the third antenna, and the fourth antenna respectively. The transmission/reception selection module 50 can transmit, through any antenna in the antenna group, an RF signal in the third frequency band transmitted by the RF transceiver 40, and can also receive an RF signal in the third frequency band received by any antenna in the antenna group and transmit the RF signal to the RF transceiver 40, to enable the RF transceiving system to achieve 4*4 MIMO function for the RF signals in the three frequency bands. Specifically, the RF signal in the third frequency band transmitted by the transmission/reception selection module 50 can be directly transmitted to any antenna for transmission or can be transmitted to any antenna through the RF LFEM device 30.

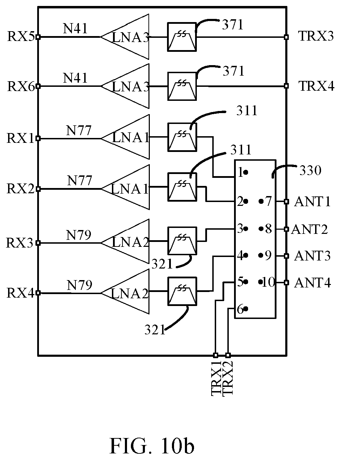

As illustrated in FIG. 10b, in an implementation, the third receive circuit 370 includes a third LNA LNA3. An input end of the third LNA LNA3 is connected with one transmit/receive port TRX, and an output end of the third LNA LNA3 is connected with one receive port RX. The third LNA LNA3 is configured to amplify a received RF signal in the third frequency band. In an implementation, the third receive circuit 370 further includes a third filter unit 371. The third filter unit 371 is disposed in a receive channel for the RF signal in the third frequency band, and configured to filter the received RF signal in the third frequency band.

In an implementation, the RF LFEM device 30 is provided with four transmit/receive ports TRX, which are a first transmit/receive port TRX1, a second transmit/receive port TRX2, a third transmit/receive port TRX3, and a fourth transmit/receive port TRX4 respectively. The first transmit/receive port TRX1 and the second transmit/receive port TRX2 are respectively connected with two first ends of the first switch unit 330, the first transmit/receive port TRX1 is further connected with the RF antenna port ANT of the first RF PA Mid device 10, and the second transmit/receive port is further connected with the RF antenna port ANT of the second RF PA Mid device 20. The third transmit/receive port TRX3 and the fourth transmit/receive port TRX4 are respectively connected with the input ends of the two third receive circuits 370. The first switch unit 330 includes six first ends. Except for the two first ends respectively connected with the first transceiver port TRX1 and the second transceiver port TRX2, the other four first ends are connected with the input ends of the two first receive circuits 310 and the input ends of the two second receive circuits 320 in one-to-one correspondence. The first switch unit 330 is configured to select and conduct a path between an antenna port and any first receive circuit 310, any second receive circuit 320, the first transmit/receive port TRX1, or the second transmit/receive port TRX2, so as to select and conduct a receive channel and a transmit channel for an RF signal in the first frequency band or a receive channel and a transmit channel for an RF signal in the second frequency band.

As illustrated in FIG. 16b, in an implementation, the RF LFEM device 30 can be understood as a packaged chip. The first antenna port ANT1, the second antenna port ANT2, the third antenna port ANT3, the fourth antenna port ANT4, the first transmit/receive port TRX1, the second transmit/receive port TRX2, the third transmit/receive port TRX3, the fourth transmit/receive port TRX4, and the receive ports RX configured in the RF LFEM device 30 can be understood as RF pin terminals of the RF LFEM device 30, and are configured to connect various external devices.

As illustrated in FIG. 11, in an implementation, the transmission/reception selection module 50 includes a first combiner 561, a second combiner 562, a third combiner 563, a fourth combiner 564, a first multiplexing switch 540, a second multiplexing switch 550, a second switch unit 530, a third RF PA Mid device 510, and a fourth RF PA Mid device 520. Each of the third RF PA Mid device 510 and the fourth RF PA Mid device 520 is provided with an RF antenna port. Two first ends of the first multiplexing switch 540 are respectively connected with the third transmit/receive port TRX3 and one second end (e.g., terminal 2) of the second switch unit 530. A second end of the first multiplexing switch 540 and the second antenna port ANT2 are respectively connected with the second antenna Ant2 via the second combiner 562. Two first ends of the second multiplexing switch 550 are respectively connected with the fourth transmit/receive port and another second end (e.g., terminal 4) of the second switch unit 530. A second end of the second multiplexing switch 550 and the fourth antenna port ANT4 are respectively connected with the fourth antenna Ant4 via the fourth combiner 564. Two first ends of the second switch unit 530 are connected with the RF antenna port ANT of the third RF PA Mid device 510 and the RF antenna port ANT of the fourth RF PA Mid device 520 in one-to-one correspondence. Another second end (e.g., terminal 1) of the second switch unit 530 and the first antenna port ANT1 are connected with the first antenna Ant1 through the first combiner 561. Yet another second end (e.g., terminal 3) of the second switch unit 530 and the third antenna port ANT3 are connected with the third antenna Ant3 through the third combiner 563. The third RF PA Mid device 510 is further provided with an RF transmit port RFIN and an RF receive port RXOUT. The RF transmit port RFIN of the third RF PA Mid device 510 is configured to connect the RF transceiver 40, to receive an RF signal in the third frequency band transmitted by the RF transceiver 40. The RF receive port RXOUT of the third RF PA Mid device 510 is configured to connect the RF transceiver 40, to output a received RF signal in the third frequency band to the RF transceiver 40. The RF antenna port ANT of the third RF PA Mid device 510 is connected with a first end (e.g., terminal 5) of the second switch unit 530, and configured for transmission/reception of an RF signal in the third frequency band. The fourth RF PA Mid device 520 is also provided with an RF transmit port RFIN and an RF receive port RXOUT. The RF transmit port RFIN of the fourth RF PA Mid device 520 is configured to connect the RF transceiver 40, to receive an RF signal in the third frequency band transmitted by the RF transceiver 40. The RF receive port RXOUT of the fourth RF PA Mid device 520 is configured to connect the RF transceiver 40, to output a received RF signal in the third frequency band to the RF transceiver 40. The RF antenna port ANT of the fourth RF PA Mid device 520 is connected with the other first end (e.g., terminal 6) of the second switch unit 530, and configured for transmission/reception of an RF signal in the third frequency band.

In an implementation, the RF signal of the third frequency band is a 5G signal in frequency band N41.

Based on implementations described above, the RF transceiving system can support 4*4 MIMO function and SRS function in 4-antenna 2T4R. Exemplarily, referring to FIG. 11, working principles of 4*4 MIMO function for N41 are analyzed as follows.

### TX0 channel:

A transmitted RF signal is output to the RF transmit port RFIN of the third RF PA Mid device 510 via a port TX1 HB1 of the RF transceiver 40, is transmitted to the filter through the RF switch SPDT after being amplified by the power amplifier PA, and reaches the RF antenna port ANT after being filtered by the filter. The RF signal reaches the second switch unit 530 (RF switch DP4T) through Path1, is transmitted to Path3 through the second switch unit 530, and reaches the first antenna Ant1 through the first combiner 561 to be output.

### TX1 channel:

A transmitted RF signal is output to the RF transmit port RFIN of the fourth RF PA Mid device 520 via a port TX1 HB2 of the RF transceiver 40, is transmitted to the filter through the RF switch SPDT after being amplified by the power amplifier PA, and reaches the RF antenna port ANT after being filtered by the filter. The RF signal reaches the second switch unit 530 (RF switch DP4T) through Path2, is transmitted to Path5 through the second switch unit 530, and reaches the third antenna Ant3 through the third combiner 563 to be output.

### PRX channel:

A received RF signal enters from the first antenna Ant1, reaches the first combiner 561, passes through Path3 to the second switch unit 530, and is transmitted to Path1 through the second switch unit 530. The RF signal enters the third RF PA Mid device 510 via the RF antenna port ANT of the third RF PA Mid device 510, and reaches the RF switch SPDT after being filtered by the filter. The RF signal is transmitted to the RF receive port RXOUT through the RF switch SPDT, and enters the RF transceiver 40 via a port SDR PRX7.

### DRX channel:

A received RF signal enters from the second antenna Ant2, reaches the second combiner 562, passes through Path9 to the first multiplexing switch 540 (RF switch SPDT), is transmitted to Path7 through the first multiplexing switch 540, and reaches the third transmit/receive port TRX3 of the RF LFEM device 30. After being filtered by the third filter unit 371 and amplified by the third LNA LNA3, the RF signal reaches the receive port RX1 of the RF LFEM device 30, and enters the RF transceiver 40 via a port SDR DRX7.

### PRX MIMO channel:

A received RF signal enters from the third antenna Ant3, reaches the third combiner 563, passes through Path5 to the second switch unit 530, is transmitted to Path2 through the second switch unit 530, and enters the fourth RF PA Mid device 520 via the RF antenna port ANT of the fourth RF PA Mid device 520. After being filtered by the filter, the RF signal reaches the RF switch SPDT, is transmitted to the RF receive port RXOUT through the RF switch SPDT, and enters the RF transceiver 40 via a port SDR PRX5.

### DRX MIMO channel:

A received RF signal enters from the fourth antenna Ant4, reaches the fourth combiner 564, and passes through Path10 to the second multiplexing switch 550 (RF switch SPDT). The RF signal is transmitted to Path8 through the second multiplexing switch 550, and reaches the fourth transmit/receive port TRX4 of the RF LFEM device 30. After being filtered by the third filter unit 371 and amplified by the third LNA LNA3, the RF signal reaches the receive port RX2 of the RF LFEM device 30, and enters the RF transceiver 40 via a port SDR DRX5.

Referring to FIG. 11, working principles of SRS function for N41 in the SA mode are analyzed as follows.

A transmitted RF signal is output to the RF transmit port RFIN of the third RF PA Mid device 510 via the port TX1 HB1 of the RF transceiver 40, reaches the switch SPDT after being amplified by the power amplifier PA, and is transmitted to the filter through the switch SPDT. After being filtered by the filter, the RF signal is transmitted from the RF antenna port ANT of the third RF PA Mid device 510 to the second switch unit 530 through Path1, is transmitted to Path3 through the second switch unit 530, and reaches the first combiner 561. After being combined by the first combiner 561, the RF signal is transmitted to the first antenna Ant1 to be output.

The transmitted RF signal passes through Path1 to the second switch unit 530, is transmitted to Path4 through the second switch unit 530, reaches the first multiplexing switch 540, and is transmitted to Path9 through the first multiplexing switch 540. After being combined by the second combiner 562, the RF signal is transmitted to second antenna Ant2 to be output.

A transmitted RF signal is output to the RF transmit port RFIN of the fourth RF PA Mid device 520 via the port TX1 HB2 of the RF transceiver 40, reaches the switch SPDT after being amplified by the power amplifier PA, and is transmitted to the filter through the switch SPDT. After being filtered by the filter, the RF signal is transmitted from the RF antenna port ANT of the fourth RF PA Mid device 520 to the second switch unit 530 through Path2, and is transmitted to Path5 through the second switch unit 530, and reaches the third combiner 563. After being combined by the third combiner 563, the RF signal is transmitted to the third antenna Ant2 to be output.

The transmitted RF signal passes through Path2 to the second switch unit 530, is transmitted to Path6 through the second switch unit 530, reaches the second multiplexing switch 550, and is transmitted to Path10 through the second multiplexing switch 550. After being combined by the fourth combiner 564, the RF signal is transmitted to the fourth antenna Ant4 to be output.

The SRS function for N77 and N79 is similar to the SRS function for N41, and is not repeated here. Specific SRS path configuration in SA and NAS is illustrated in Tables 2 and 3.

**Table 2, specific SRS path configuration in SA**

| | N41 | N77 | N79 |
|---|---|---|---|
| Channel0 | Path1->Path3 | Path11->Path13 | Path11->Path13 |
| Channel1 | Path1->Path4->Path9 | Path11->Path14 | Path11->Path14 |
| Channel2 | Path2->Path5 | Path12->Path15 | Path12->Path15 |
| Channel3 | Path2->Path6->Path10 | Path12->Path16 | Path12->Path16 |

**Table 3, specific SRS path configuration in NSA**

| | N41 | N77 | N79 |
|---|---|---|---|
| Channel0 | Path1->Path3 | Path11->Path13 | Path11->Path13 |
| Channel1 | Path1->Path4->Path9 | Path11->Path14 | Path11->Path14 |
| Channel2 | Path1->Path5 | Path11->Path15 | Path11->Path15 |
| Channel3 | Path1->Path6->Path10 | Path11->Path16 | Path11->Path16 |

Referring to the RF transceiving system illustrated in FIG. 11, dual-channel reception of RF signals in three frequency bands is realized through the RF LFEM device 30, and six receive channels are integrated and packaged into the same chip, such that a substrate area occupied by each device is saved, physical space is freed up for performance optimization of other modules, and costs are reduced. Additionally, wiring is simplified, which facilitates signal integrity on the substrate and reducing interference between signals. 4*4 MIMO function in the 2T4R mode can be achieved by the RF LFEM device 30 cooperating with the antenna group, the first RF PA Mid device 10, and the second RF PA Mid device 20, and thus the system channel capacity is enhanced, and the accuracy and efficiency of channel estimation are improved.

As illustrated in FIG. 12, in an implementation, the RF LFEM device 30 is further provided with a fifth antenna port ANT5 and a sixth antenna port ANT6. The RF LFEM device 30 is provided with three transmit/receive ports, which are a first transmit/receive port TRX1, a second transmit/receive port TRX2, and a third transmit/receive port TRX3 respectively. The first transmit/receive port TRX1 is connected with the RF antenna port ANT of the first RF PA Mid device 10, and the second transmit/receive port TRX2 is connected with the RF antenna port ANT of the second RF PA Mid device 20. The RF LFEM device 30 further includes a third switch unit 380.Three first ends of the third switch unit 380 are connected with the input ends of the two third receive circuits 370 and the third transmit/receive port TRX3 in one-to-one correspondence. Two second ends of the third switch unit 380 are respectively connected with the fifth antenna port ANT5 and the sixth antenna port ANT6.

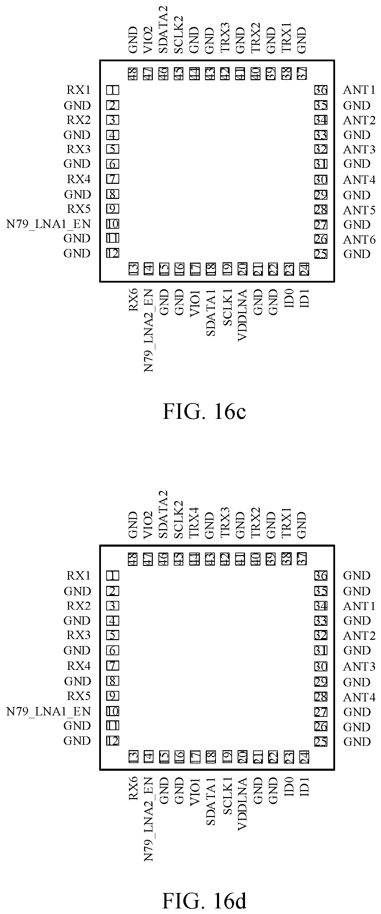

As illustrated in FIG. 16c, in an implementation, the RF LFEM device 30 can be understood as a packaged chip. The first antenna port ANT1, the second antenna port ANT2, the third antenna port ANT3, the fourth antenna port ANT4, the fifth antenna port ANT5, the sixth antenna port ANT6, the first transmit/receive port TRX1, the second transmit/receive port TRX2, the third transmit/receive port TRX3, and the receive port RX configured in the RF LFEM device 30 can be understood as RF pin terminals of the RF LFEM device 30, and are configured to connect various external devices.

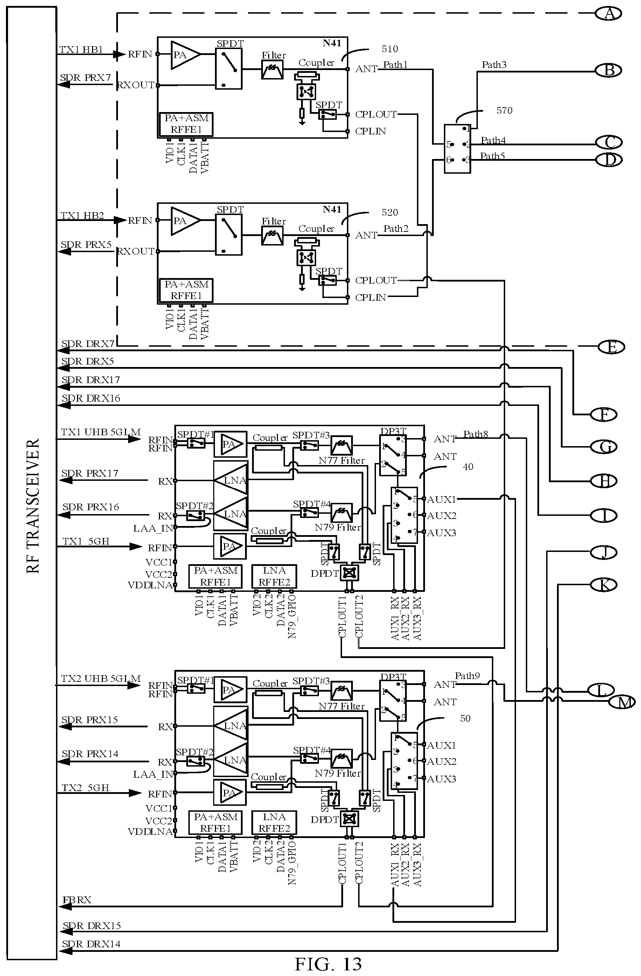

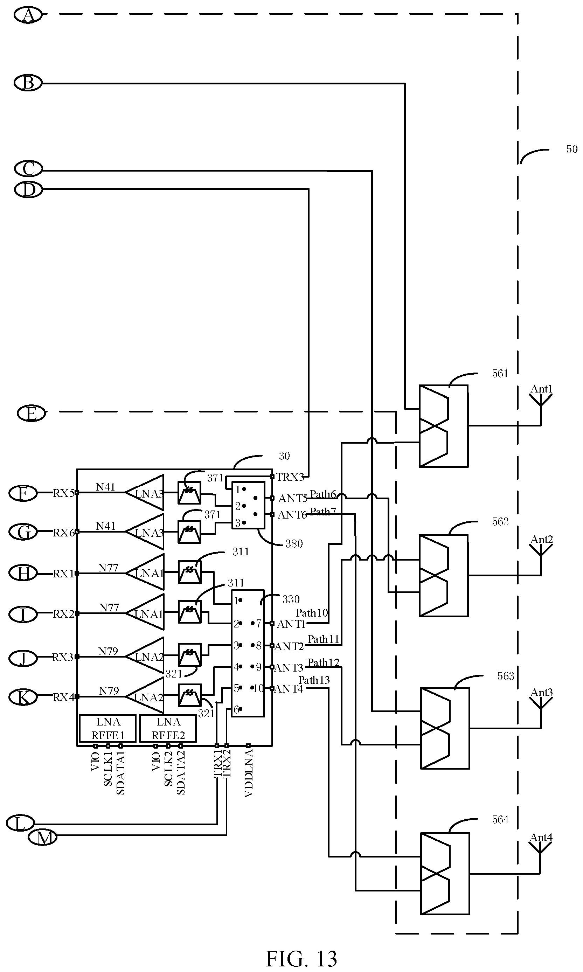

As illustrated in FIG. 13, in an implementation, the transmission/reception selection module 50 includes a first combiner 561, a second combiner 562, a third combiner 563, a fourth combiner 564, a fourth switch unit 570, a third RF PA Mid device 510, and a fourth RF PA Mid device 520. Each of the third RF PA Mid device 510 and the fourth RF PA Mid device 520 is provided with an RF antenna port. The fifth antenna port ANT5 and the second antenna port ANT2 are respectively connected with the second antenna Ant2 through the second combiner 562. The sixth antenna port ANT6 and the fourth antenna port ANT4 are respectively connected with the fourth antenna Ant4 through the fourth combiner 564. Specifically, two first ends of the fourth switch unit 570 are respectively connected with the RF antenna port of the third RF PA Mid device 510 and the RF antenna port of the fourth RF PA Mid device 520 in one-to-one correspondence. One second end of the fourth switch unit 570 is connected with the third transmit/receive port TRX3. Another second end of the fourth switch unit 570 and the first antenna port ANT1 are respectively connected with the first antenna Ant1 through the first combiner 561. Yet another second end of the fourth switch unit 570 and the third antenna port ANT3 are respectively connected with the third antenna Ant3 through the third combiner 563. The fourth switch unit 570 is configured to switch to conduct the transmit/receive path of the third RF PA Mid device 510 or the transmit/receive path of the fourth RF PA Mid device 520.

The third RF PA Mid device 510 is provided with an RF transmit port RFIN, an RF receive port RXOUT, and an RF antenna port ANT. The RF transmit port RFIN of the third RF PA Mid device 510 is configured to connect the RF transceiver 40, to receive an RF signal in the third frequency band transmitted by the RF transceiver 40. The RF receive port RXOUT of the third RF PA Mid device 510 is configured to connect the RF transceiver 40, to output a received RF signal in the third frequency band to the RF transceiver 40. The RF antenna port ANT of the third RF PA Mid device 510 is connected with one first end of the fourth switch unit 570, and configured for transmission/reception of an RF signal in the third frequency band.

The fourth RF PA Mid device 520 is provided with an RF transmit port RFIN, an RF receive port RXOUT, and an RF antenna port ANT. The RF transmit port RFIN of the fourth RF PA Mid device 520 is configured to connect the RF transceiver 40, to receive an RF signal in the third frequency band transmitted by the RF transceiver 40. The RF receive port RXOUT of the fourth RF PA Mid device 520 is configured to connect the RF transceiver 40, to output a received RF signal in the third frequency band to the RF transceiver 40. The RF antenna port ANT of the fourth RF PA Mid device 520 is connected with another first end of the fourth switch unit 570, and configured for transmission/reception of an RF signal in the third frequency band.

Based on implementations mentioned above, the RF transceiving system can support 4*4 MIMO function and SRS function in 4-antenna 2T4R. Exemplarily, referring to FIG. 13, working principles of 4*4 MIMO function for N41 are analyzed as follows.

### TX0 channel:

A transmitted RF signal is output to the RF transmit port RFIN of the third RF PA Mid device 510 via the port TX1 HB1 of the RF transceiver 40, is transmitted to the filter through the RF switch SPDT after being amplified by the power amplifier PA, and reaches the RF antenna port ANT after being filtered by the filter. The RF signal passes through Path1 to the fourth switch unit 570 (RF switch DP3T), is transmitted to Path3 through the fourth switch unit 570, and reaches the first antenna Ant1 through the first combiner 561 to be output.

### TX1 channel:

A transmitted RF signal is output to the RF transmit port RFIN of the fourth RF PA Mid device 520 via the port TX1 HB2 of the RF transceiver 40, is transmitted to the filter through the RF switch SPDT after being amplified by the power amplifier PA, and reaches the RF antenna port ANT after being filtered by the filter. The RF signal passes through Path2 to the fourth switch unit 570 (RF switch DP3T), is transmitted to Path4 through the fourth switch unit 570, and reaches the third antenna Ant3 through the third combiner 563 to be output.

### PRX channel:

A received RF signal enters from the first antenna Ant1, reaches the first combiner 561, passes through Path3 to the fourth switch unit 570, is transmitted to Path1 through the fourth switch unit 570, and enters the third RF PA Mid device 510 via the RF antenna port ANT of the third RF PA Mid device 510. After being filtered by the filter, the RF signal reaches the RF switch SPDT, reaches the RF receive port RXOUT through the RF switch SPDT, and enters the RF transceiver 40 via the port SDR PRX7.

### DRX channel:

A received RF signal enters from the second antenna Ant2, reaches the second combiner 562, passes through Path6 to the fifth antenna port ANT5 of the RF LFEM device 30, and is transmitted to the third filter unit 371 and the third LNA LNA3 through the third switch unit 380 (RF switch DP3T). After being filtered by the third filter unit 371 and amplified by the third LNA LNA3, the RF signal reaches the receive port RX1 of the RF LFEM device 30, and enters the RF transceiver 40 via the port SDR DRX7.

### PRX MIMO channel:

A received RF signal enters from the third antenna Ant3, reaches the third combiner 563, passes through Path4 to the fourth switch unit 570, is transmitted to Path2 through the fourth switch unit 570, and enters the fourth RF PA Mid device 520 via the RF antenna port ANT of the fourth RF PA Mid device 520. After being filtered by the filter, the RF signal reaches the RF switch SPDT, reaches the RF receive port RXOUT through the RF switch SPDT, and enters the RF transceiver 40 via the port SDR PRX5.

### DRX MIMO channel:

A received RF signal enters from the fourth antenna Ant4, reaches the fourth combiner 564, passes through Path7 to the second antenna port ANT2 of the RF LFEM device 30, and is transmitted to the third filter unit 371 and the third LNA LNA3 through the third switch unit 380 (RF switch DP3T). After being filtered by the third filter unit 371 and amplified by the third LNA LNA3, the RF signal reaches the receive port RX2 of the RF LFEM device 30, and enters the RF transceiver 40 via the port SDR DRX5.

Referring to FIG. 13, working principles of SRS function for N41 in the SA mode are analyzed as follows.

A transmitted RF signal is output to the RF transmit port RFIN of the third RF PA Mid device 510 via the port TX1 HB1 of the RF transceiver 40, reaches the switch SPDT after being amplified by the power amplifier PA, and is transmitted to the filter through the switch SPDT. After being filtered by the filter, the RF signal is transmitted from the RF antenna port ANT of the third RF PA Mid device 510 to the fourth switch unit 570 through Path1, is transmitted to Path3 through the fourth switch unit 570, and reaches the first combiner 561. After being combined by the first combiner 561, the RF signal reaches the first antenna Ant1 to be output.

The transmitted RF signal passes through Path1 to the fourth switch unit 570, is transmitted to Path5 through the fourth switch unit 570, reaches the third transmit/receive port TRX3 of the RF LFEM device 30, is transmitted to the fifth antenna port ANT5 through the third switch unit 380, and passes through Path6. After being combined by the second combiner 562, the RF signal reaches the second antenna Ant2 to be output.

A transmitted RF signal is output to the RF transmit port RFIN of the fourth RF PA Mid device 520 via the port TX1 HB2 of the RF transceiver 40, reaches the switch SPDT after being amplified by the power amplifier PA, and is transmitted to the filter via the switch SPDT. After being filtered by the filter, the RF signal is transmitted from the RF antenna port ANT of the fourth RF PA Mid device 520 to the fourth switch unit 570 through Path2, is transmitted to Path4 through the fourth switch unit 570, and reaches the third combiner 563. After being combined by the third combiner 563, the RF signal is transmitted to the third antenna Ant3 to be output.

The transmitted RF signal passes through Path2 to the fourth switch unit 570, is transmitted to Path5 through the fourth switch unit 570, reaches the third transmit/receive port TRX3 of the RF LFEM device 30, is transmitted to to the sixth antenna port ANT6 through the third switch unit 380, and reaches Path7. After being combined by the fourth combiner 564, the RF signal reaches the fourth antenna Ant4 to be output.

SRS function for N77 and N79 is similar to the SRS function for N41, and is not repeated here. Specific SRS path configuration in SA and NAS is illustrated in Tables 4 and 5.

**Table 4, specific SRS path configuration in SA**

| | N41 | N77 | N79 |
|---|---|---|---|
| Channel0 | Path1->Path3 | Path8->Path10 | Path8->Path10 |
| Channel1 | Path1->Path5->Path6 | Path8->Path11 | Path8->Path11 |
| Channel2 | Path2->Path4 | Path9->Path12 | Path9->Path12 |
| Channel3 | Path2->Path5->Path7 | Path9->Path13 | Path9->Path13 |

**Table 5, specific SRS path configuration in NSA**

| | N41 | N77 | N79 |
|---|---|---|---|
| Channel0 | Path1->Path3 | Path8->Path10 | Path8->Path10 |
| Channel1 | Path1->Path5->Path6 | Path8->Path11 | Path8->Path11 |
| Channel2 | Path1->Path4 | Path8->Path12 | Path8->Path12 |
| Channel3 | Path 1->Path5->Path7 | Path8->Path13 | Path8->Path13 |

According to the RF transceiving system illustrated in FIG. 13, dual-channel reception of RF signals in three frequency bands is realized through the RF LFEM device 30, and six receive channels are integrated and packaged into the same chip, such that a substrate area occupied by each device is saved, physical space is freed up for performance optimization of other modules, and costs are reduced. Additionally, wiring is simplified, which facilitates signal integrity on the substrate and reducing interference between signals. 4*4 MIMO function in the 2T4R mode can be achieved by the RF LFEM device 30 cooperating with the antenna group, the first RF PA Mid device 10, and the second RF PA Mid device 20, and thus the system channel capacity is enhanced, and the accuracy and efficiency of channel estimation are improved. Furthermore, in the RF transceiving system illustrated in FIG. 13, there is no need to dispose the first multiplexing switch 540 and second multiplexing switch 550. Instead, the first multiplexing switch 540 and second multiplexing switch 550 are integrated into the RF LFEM device 30, such that integration is increased and the costs are further saved.

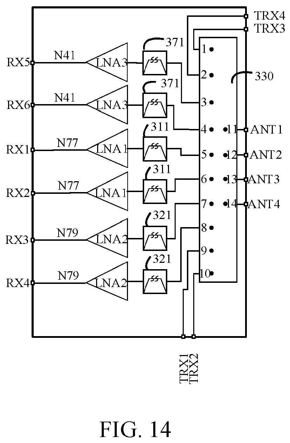

As illustrated in FIG. 14, in an implementation, the RF LFEM device 30 is provided with four transmit/receive ports, which are a first transmit/receive port TRX1, a second transmit/receive port TRX2, a third transmit/receive port TRX3, and a fourth transmit/receive port TRX4. The number of first ends of the first switch unit 330 is ten. Specifically, the ten first ends of the first switch unit 330 are connected with the input ends of the two first receive circuits 310, the input ends of the two second receive circuits 320, the input ends of the two third receive circuits 370, the first transmit/receive port TRX1, the second transmit/receive port TRX2, the third transmit/receive port TRX3, and the fourth transmit/receive port TRX4 in one-to-one correspondence. The RF LFEM device 30 is connected with the transmission/reception selection module 50 through the third transmit/receive port TRX3 and the fourth transmit/receive port. The first switch unit 330 is configured to select and conduct any receive channel of an RF signal in the three frequency bands, and further configured to select and conduct a transmit/receive path between the first RF PA Mid device 10, the second RF PA Mid device 20, and the transmission/reception selection module 50.

As illustrated in FIG. 16d, in an implementation, the RF LFEM device 30 can be understood as a packaged chip. The first antenna port ANT1, the second antenna port ANT2, the third antenna port ANT3, the fourth antenna port ANT4, the first transmit/receive port TRX1, the second transmit/receive port TRX2, the third transmit/receive port TRX3, the fourth transmit/receive port TRX4, and the receive port RX configured in the RF LFEM device 30 can be understood as RF pin terminals of the RF LFEM device 30, and are configured to connect various external devices.

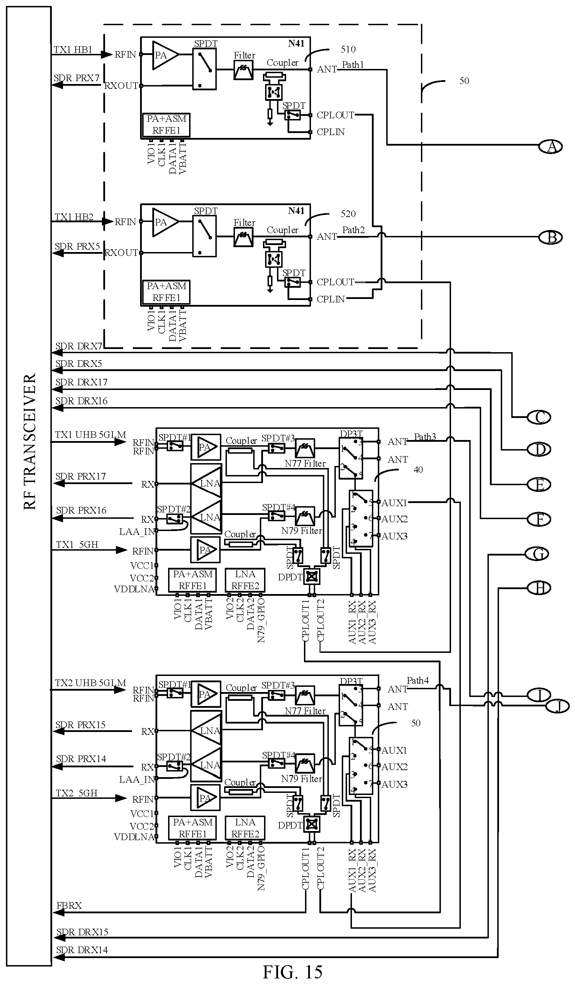

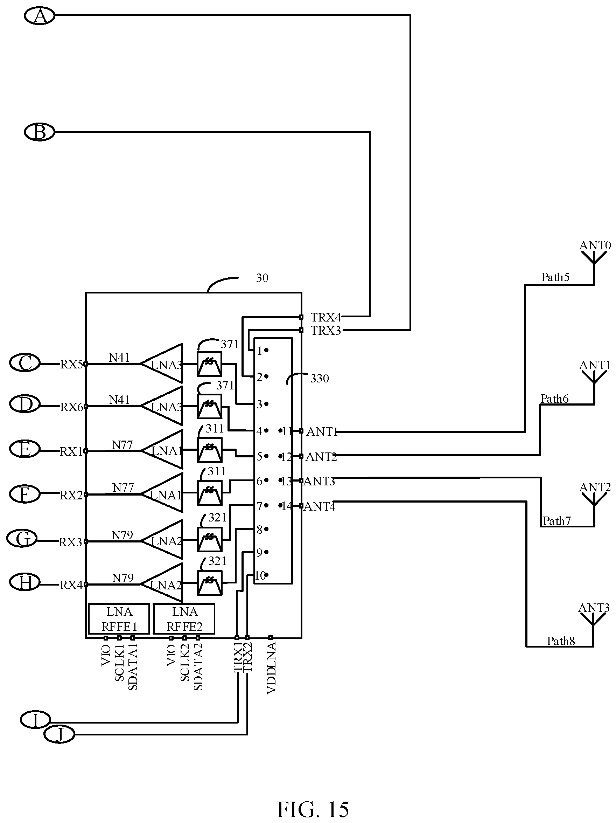

As illustrated in FIG. 15, in an implementation, the transmission/reception selection module 50 includes a third RF PA Mid device 510 and a fourth RF PA Mid device 520. Specifically, the third RF PA Mid device 510 is provided with an RF transmit port RFIN, an RF receive port RXOUT, and an RF antenna port ANT. The RF transmit port RFIN of the third RF PA Mid device 510 is configured to connect the RF transceiver 40 to receive an RF signal in the third frequency band transmitted by the RF transceiver 40. The RF receive port RXOUT of the third RF PA Mid device 510 is configured to connect the RF transceiver 40 to output the received RF signal in the third frequency band to the RF transceiver 40. The RF antenna port ANT of the third RF PA Mid device 510 is connected with the third transceiver port TRX3 and configured for transmission/reception of an RF signal in the third frequency band.

The fourth RF PA Mid device 520 is provided with an RF transmit port RFIN, an RF receive port RXOUT, and an RF antenna port ANT. The RF transmit port RFIN of the fourth RF PA Mid device 520 is configured to connect the RF transceiver 40 to receive an RF signal in the third frequency band transmitted by the RF transceiver 40. The RF receive port RXOUT of the fourth RF PA Mid device 520 is configured to connect the RF transceiver 40 to output the received RF signal in the third frequency band to the RF transceiver 40. The RF antenna port ANT of the fourth RF PA Mid device 520 is connected with the fourth transceiver port TRX4 and configured for transmission/reception of an RF signal in the third frequency band.

Based on implementations described above, the RF transceiving system can support 4*4 MIMO function and SRS function in 4-antenna 2T4R. Exemplarily, referring to FIG. 15, working principles of 4*4 MIMO function for N41 are analyzed as follows.

### TX0 channel:

A transmitted RF signal is output to the RF transmit port RFIN of the third RF PA Mid device 510 via the port TX1 HB1 of the RF transceiver 40, is transmitted to the filter through the RF switch SPDT after being amplified by the power amplifier PA, and reaches the RF antenna port ANT after being filtered by the filter. The RF signal passes through Path1, reaches the first switch unit 330 (RF switch 4P10T) via the third transmit/receive port TRX3 of the RF LFEM device 30, is transmitted to Path5 through the first switch unit 330, and reaches the first antenna Ant1 to be output.

### TX1 channel:

A transmitted RF signal is output to the RF transmit port RFIN of the fourth RF PA Mid device 520 via the port TX1 HB2 of the RF transceiver 40, is transmitted to the filter through the RF switch SPDT after being amplified by the power amplifier PA, and reaches the RF antenna port ANT after being filtered by the filter. The RF signal passes through Path2, reaches the first switch unit 330 via the fourth transmit/receive port TRX4 of the RF LFEM device 30, is transmitted to Path7 through the fourth switch unit 570, and reaches the third antenna Ant3 to be output.

### PRX channel:

A received RF signal enters from the first antenna Ant1, passes through Path5, reaches the first switch unit 330 via the first antenna port ANT1 of the RF LFEM device 30, is transmitted to the contact 1 through the first switch unit 330, passes through Path1, and enters via the RF antenna port ANT of the third RF PA Mid device 510. The RF signal reaches the RF switch SPDT after being filtered by the filter, is transmitted to the RF receive port RXOUT through the RF switch SPDT, and enters the RF transceiver 40 via the SDR PRX7 port.

### DRX channel:

A received RF signal enters from the second antenna Ant2, passes through Path6, reaches the first switch unit 330 via the second antenna port ANT2 of the RF LFEM device 30, and is transmitted to the contact 3 through the first switch unit 330. After being filtered through the third filter unit 371 and amplified by the third LNA LNA3, the RF signal reaches the receive port RX1 of the RF LFEM device 30, and enters the RF transceiver 40 via the port SDR DRX7.

### PRX MIMO channel:

A received RF signal enters from the third antenna Ant3, passes through Path7, and reaches the first switch unit 330 via the third antenna port ANT3 of the RF LFEM device 30. The RF signal is transmitted to a contact 2 through the first switch unit 330, passes through Path2, and enters the fourth RF PA Mid device 520 via the RF antenna port ANT of the fourth RF PA Mid device 520. The RF signal reaches the RF switch after being filtered by the filter, is transmitted to the RF receive port RXOUT through the RF switch SPDT, and enters the RF transceiver 40 via the port SDR PRX5.

### DRX MIMO channel:

A received RF signal enters from the fourth antenna Ant4, passes through Path8, reaches the first switch unit 330 via the fourth antenna port ANT4 of the RF LFEM device 30, and is transmitted to a contact 4 through the first switch unit 330. After being filtered by the third filter unit 371 and amplified by the third LNA LNA3, the RF signal reaches the receive port RX2 of the RF LFEM device 30, and enters the RF transceiver 40 via the SDR DRX5 port.

Referring to FIG. 15, working principles of the SRS function for N41 in the SA mode are analyzed as follows.

A transmitted RF signal is output to the RF transmit port RFIN of the third RF PA Mid device 510 via the port TX1 HB1 of the RF transceiver 40, reaches the switch SPDT after being amplified by the power amplifier PA, and is transmitted to the filter through the switch SPDT. After being filtered by the filter, the RF signal is transmitted to Path1 via the RF antenna port ANT of the third RF PA Mid device 510, reaches the first switch unit 330 via the third transmit/receive port TRX3 of the RF LFEM device 30, and is transmitted to a contact 11 through the first switch unit 330. The RF signal passes through Path5 from the first antenna port ANT1, and reaches the first antenna Ant1 to be output.

The transmitted RF signal passes through Path1 to the first switch unit 330, is transmitted to a contact 12 through the first switch unit 330, passes through Path6 from the second antenna port ANT2, and reaches the second antenna Ant2 to be output.

A transmitted RF signal is output to the RF transmit port RFIN of the fourth RF PA Mid device 520 via the port TX1 HB2 of the RF transceiver 40, reaches the switch SPDT after being amplified by the power amplifier PA, and is transmitted to the filter through the switch SPDT. After being filtered by the filter, the RF signal is transmitted to Path2 via the RF antenna port ANT of the fourth RF PA Mid device 520, and reaches the first switch unit 330 via the fourth transmit/receive port TRX4 of the RF LFEM device 30. The RF signal is transmitted to a contact 13 through the first switch unit 330, passes through Path7 from the third antenna port ANT3, and reaches the third antenna Ant3 to be output.

The transmitted RF signal passes through Path2 to the first switch unit 330, is transmitted to a contact 14 through the first switch unit 330, passes through Path8 from the fourth antenna port ANT4, and reaches the fourth antenna Ant4 to be output.

The SRS function for N77 and N79 is similar to the SRS function for N41, and is not repeated herein. Specific SRS path configuration in SA and NAS is illustrated in Tables 6 and 7.

**Table 6, specific SRS path configuration in SA**

| | N41 | N77 | N79 |
|---|---|---|---|
| Channel0 | Path1->Path5 | Path3->Path5 | Path3->Path5 |
| Channel1 | Path1->Path6 | Path3->Path6 | Path3->Path6 |
| Channel2 | Path2->Path7 | Path4->Path7 | Path4->Path7 |
| Channel3 | Path2->Path8 | Path4->Path8 | Path4->Path8 |

**Table 7, specific SRS path configuration in NSA**

| | N41 | N77 | N79 |
|---|---|---|---|
| Channel0 | Path1->Path5 | Path3->Path5 | Path3->Path5 |
| Channel1 | Path1->Path6 | Path3->Path6 | Path3->Path6 |
| Channel2 | Path1->Path7 | Path3->Path7 | Path3->Path7 |
| Channel3 | Path1->Path8 | Path3->Path8 | Path3->Path8 |

Referring to the RF transceiving system illustrated in FIG. 15, dual-channel reception of RF signals in three frequency bands is realized through the RF LFEM device 30, and six receive channels are integrated and packaged into the same chip, such that a substrate area occupied by each device is saved, physical space is freed up for performance optimization of other modules, and costs are reduced. Additionally, wiring is simplified, which facilitates signal integrity on the substrate and reducing interference between signals. 4*4 MIMO function in the 2T4R mode can be achieved by the RF LFEM device 30 cooperating with the antenna group, the first RF PA Mid device 10, and the second RF PA Mid device 20, and thus the system channel capacity is enhanced, and the accuracy and efficiency of channel estimation are improved. Furthermore, in the RF transceiving system illustrated in FIG. 15, the integration of the RF LFEM device 30 is further enhanced by using the first switch unit 330 to replace external RF switches for implementing 2T4R, and there is no need to use a combiner for combining, such that the substrate area occupied by a device is further reduced, and costs are further saved.

Referring to FIGs. 6 to 8, in an implementation, the RF LFEM device 30 further includes a first control unit 351 and a second control unit 352. The first control unit 351 can be configured to control the first switch unit 330 to switch and conduct a receive channel for an RF signal in each frequency band, and the second control unit 352 can be configured to control the first switch unit 330 to switch and conduct a transmit channel for an RF signal in each frequency band. Specifically, each of the first control unit 351 and the second control unit 352 may be a mobile industry processor interface (MIPI) - RF front end control interface (RFFE) control unit or an RFFE control unit that comply with the RFFE bus control protocol. If the first control unit 351 and the second control unit 352 are MIPI-RFFE control units or RFFE control units, the RF PA Mid with LNA (L-PA Mid) device is further provided with an input pin CLK for a clock signal, an input pin or bidirectional pin SDATAS for a single/dual-direction data signal, a power supply pin VDD, a reference voltage pin VIO, etc.

A communication device is further provided in implementations of the disclosure. The communication device is configured with the RF transceiving system described in any of the above implementations. By configuring the RF transceiving system in the communication device, the integration of the RF transceiving system is improved, and the substrate area occupied by each device in the RF transceiving system is reduced. Additionally, power supply, logic control, and PCB layout and wiring of the RF LFEM device 30 can be simplified, and thus costs are saved.

In the context of the disclosure, reference terms such as "some implementations", "other implementations", "preferred implementations" mean that a specific feature, structure, material, or characteristic described in combination with the implementation or example are included in at least one implementation or example of the disclosure. The phrase appearing in the disclosure does not necessarily refer to the same implementation or example. Various technical features of the above-described implementations can be combined in any way. For simple illustration, not all possible combinations of the technical features in the above-described implementations have been described. However, as long as the combinations of these technical features do not conflict, the combinations should be considered within the scope of the disclosure. Implementations described above are merely several implementing methods of the disclosure, and should not be understood as limitation on the scope of the disclosure although implementations above are described relatively specific and detailed. It should be noted that, for those skilled in the art, various modifications and improvements can be made within the concept of the disclosure, and these fall within the scope of protection of the disclosure. Therefore, the scope of protection of the disclosure should be determined by the appended claims.

## Claims

1. A radio-frequency (RF) transceiving system, comprising:
an RF transceiver (40);
an antenna group, comprising a first antenna (Ant1), a second antenna (Ant2), a third antenna (Ant3), and a fourth antenna (Ant4), and configured for RF signal transmission/reception;
**characterized by** further comprising:
an RF low-noise-amplifier, LNA,-front-end module, LFEM, device (30) provided with a plurality of transmit/receive ports (TRX), a first antenna port (ANT1) connected with the first antenna (Ant1), a second antenna port (ANT2) connected with the second antenna (Ant2), a third antenna port (ANT3) connected with the third antenna (Ant3), a fourth antenna port (ANT4) connected with the fourth antenna (Ant4), and a plurality of receive ports (RX) connected with the RF transceiver (40), wherein the RF LFEM device (30) is configured for transmission and dual-channel reception of RF signals in at least two frequency bands;
a first RF power amplifier module including duplexers, PA Mid, device (10) connected with the RF transceiver (40) and one transmit/receive port (TRX) of the RF LFEM device (30), and configured to transmit/receive an RF signal in a plurality of frequency bands; and
a second RF PA Mid device (20) connected with the RF transceiver (40) and one transmit/receive port (TRX) of the RF LFEM device (30), and configured to transmit/receive an RF signal in a plurality of frequency bands;
wherein the RF LFEM device (30) comprises at least:
two first receive circuits (310), each of the two first receive circuits (310) is configured to receive and amplify an RF signal in a first frequency band;
two second receive circuits (320), each of the two second receive circuits (320) is configured to receive and amplify an RF signal in a second frequency band, wherein output ends of the two first receive circuits (310) and output ends of the two second receive circuits (320) are correspondingly connected with four receive ports (RX) in one-to-one correspondence; and
a first switch unit (330), a plurality of first ends of the first switch unit (330) are correspondingly connected with input ends of the two first receive circuits (310), input ends of the two second receive circuits (320), and the plurality of transmit/receive ports(TRX) in one-to-one correspondence, and four second ends of the first switch unit (330) are correspondingly connected with the first antenna port (ANT1), the second antenna port (ANT2), the third antenna port (ANT3), and the fourth antenna port (ANT4) in one-to-one correspondence.

2. The RF transceiving system according to claim 1, wherein the RF signal in the first frequency band and the RF signal in the second frequency band are respectively a 5th generation mobile communication technology (5G) signal in frequency band N77 and a 5G signal in frequency band N79.

3. The RF transceiving system according to claim 1, wherein
the RF LFEM device (30) further comprises two third receive circuits (370), each of the two third receive circuits (370) is configured to receive and amplify an RF signal in a third frequency band, to enable the RF LFEM device (30) to perform dual-channel reception of RF signals in the three frequency bands; and
the RF transceiving system further comprises a transmission/reception selection module (50) connected with the RF transceiver (40), the RF LFEM device (30), the first antenna (Ant1), the second antenna (Ant2), the third antenna (Ant3), and the fourth antenna (Ant4) respectively, and configured for transmission/reception selection of the RF signal in the third frequency band, to enable the RF transceiving system to realize 4*4 multiple input multiple output, MIMO, function for the RF signals in the three frequency bands.

4. The RF transceiving system according to claim 3, wherein
the number of the plurality of transmit/receive ports (TRX) is four, which are a first transmit/receive port (TRX1), a second transmit/receive port (TRX2), a third transmit/receive port (TRX3), and a fourth transmit/receive port (TRX4) respectively;
the first switch unit (330) comprises six first ends, the six first ends of the first switch unit (330) are correspondingly connected with the input ends of the two first receive circuits (310), the input ends of the two second receive circuits (320), the first transmit/receive port (TRX1), and the second transmit/receive port (TRX2), wherein the first transmit/receive port (TRX1) is further connected with an RF antenna port (ANT) of the first RF PA Mid device (10), and the second transmit/receive port (TRX2) is further connected with an RF antenna port (ANT) of the second RF PA Mid device (20); and
the third transmit/receive port (TRX3) and the fourth transmit/receive port (TRX4) are respectively connected with input ends of the two third receive circuits (370).

5. The RF transceiving system according to claim 4, wherein the transmission/reception selection module (50) comprises a first combiner (561), a second combiner (562), a third combiner (563), a fourth combiner (564), a first multiplexing switch (540), a second multiplexing switch (550), a second switch unit (530), a third RF PA Mid device (510), and a fourth RF PA Mid device (520), wherein
each of the third RF PA Mid device (510) and the fourth RF PA Mid device (520) is provided with an RF antenna port;
one first end of the first multiplexing switch (540) is connected with an input end of one third receive circuit (370) through the third transmit/receive port (TRX3), and a second end of the first multiplexing switch (540) and the second antenna port (ANT2) are connected with the second antenna (Ant2) through the second combiner (562);
one first end of the second multiplexing switch (550) is connected with one input end of another third receive circuit (370) through the fourth transmit/receive port (TRX4), and a second end of the second multiplexing switch (550) and the fourth antenna port (ANT4) are connected with the fourth antenna (Ant4) through the fourth combiner (564); and
the second switch unit (530) comprises two first ends and a plurality of second ends, the two first ends of the second switch unit (530) are correspondingly connected with the RF antenna port (ANT) of the third RF PA Mid device (510) and the RF antenna port (ANT) of the fourth RF PA Mid device (520), two second ends of the second switch unit (530) are correspondingly connected with another first end of the first multiplexing switch (540) and another first end of the second multiplexing switch (550), another second end of the second switch unit (530) and the first antenna port (ANT1) are connected with the first antenna (Ant1) through the first combiner (561), and yet another second end of the second switch unit (530) and the third antenna port (ANT3) are connected with the third antenna (Ant3) through the third combiner (563), wherein,
the third RF PA Mid device (510) and the fourth RF PA Mid device (520) are respectively further connected with the RF transceiver (40) and both configured to transmit/receive the RF signal in the third frequency band.

6. The RF transceiving system according to claim 3, wherein
the RF LFEM device (30) is further provided with a fifth antenna port (ANT5) and a sixth antenna port (ANT6), the number of the plurality of transmit/receive ports (TRX) is three which are a first transmit/receive port (TRX1), a second transmit/receive port (TRX2), and a third transmit/receive port (TRX3) respectively, wherein the first transmit/receive port (TRX1) is connected with an RF antenna port (ANT) of the first RF PA Mid device (10), and the second transmit/receive port (TRX2) is connected with an RF antenna port (ANT) of the second RF PA Mid device (20); and
the RF LFEM device (30) further comprises a third switch unit comprising three first ends and two second ends, the three first ends of the third switch unit are correspondingly connected with input ends of the two third receive circuits (370) and the third transmit/receive port (TRX3), and the two second ends of the third switch unit are respectively connected with the fifth antenna port (ANT5) and the sixth antenna port (ANT6).

7. The RF transceiving system according to claim 6, wherein the transmission/reception selection module (50) comprises a first combiner (561), a second combiner (562), a third combiner (563), a fourth combiner (564), a fourth switch unit (570), a third RF PA Mid device (510), and a fourth RF PA Mid device (520), wherein
each of the third RF PA Mid device (510) and the fourth RF PA Mid device (520) is provided with an RF antenna port;
the fourth switch unit (570) comprises two first ends and three second ends, the two first ends of the fourth switch unit (570) are correspondingly connected with the RF antenna port (ANT) of the third RF PA Mid device (510) and the RF antenna port (ANT) of the fourth RF PA Mid device (520), one second end of the fourth switch unit (570) is connected with the third transmit/receive port (TRX3), another second end of the fourth switch unit (570) and the first antenna port (ANT1) are connected with the first antenna (Ant1) through the first combiner (561), and yet another second end of the fourth switch unit (570) and the third antenna port (ANT3) are connected with the third antenna (Ant3) through the third combiner (563); and
the fifth antenna port (ANT5) and the second antenna port (ANT2) of the RF LFEM device (30) are connected with the second antenna (Ant2) through the second combiner (562),, and the sixth antenna port (ANT6) and the fourth antenna port (ANT4) are connected with the fourth antenna (Ant4) through the fourth combiner (564), wherein the third RF PA Mid device (510) and the fourth RF PA Mid device (520) are further connected with the RF transceiver (40) respectively and both configured to transmit/receive the RF signal in the third frequency band.

8. The RF transceiving system according to claim 3, wherein the RF LFEM device (30) is provided with four transmit/receive ports (TRX), which are a first transmit/receive port (TRX1), a second transmit/receive port (TRX2), a third transmit/receive port (TRX3), and a fourth transmit/receive port (TRX4) respectively; and
the first switch unit (330) comprises ten first ends correspondingly connected with the input ends of the two first receive circuits (310), the input ends of the two second receive circuits (320), input ends of the two third receive circuits (370), the first transmit/receive port (TRX1), the second transmit/receive port (TRX2), the third transmit/receive port (TRX3), and the fourth transmit/receive port (TRX4), wherein the third transmit/receive port (TRX3) and the fourth transmit/receive port (TRX4) are further connected with the transmission/reception selection module (50).

9. The RF transceiving system according to claim 8, wherein the transmission/reception selection module (50) comprises:
a third RF PA Mid device (510) provided with an RF antenna port, the RF antenna port (ANT) of the third RF PA Mid device (510) is connected with the third transmit/receive port (TRX3), and the third RF PA Mid device (510) is further connected with the RF transceiver (40) and configured to transmit/receive the RF signal in the third frequency band; and
a fourth RF PA Mid device (520) provided with an RF antenna port, the RF antenna port (ANT) of the fourth RF PA Mid device (520) is connected with the fourth transmit/receive port (TRX4) and configured to transmit/receive the RF signal in the third frequency band.

10. The RF transceiving system according to claim 3, the RF signal in the third frequency band is a 5G signal in frequency band N41.

11. The RF transceiving system according to claim 1, wherein each of the first RF PA Mid device (10) and the second RF PA Mid device (20) is provided with an RF transmit port (RFIN), an RF receive port (RFOUT), and an RF antenna port (ANT), wherein
the RF transmit port (RFIN) is configured to connect the RF transceiver (40) to receive an RF signal transmitted by the RF transceiver (40);
the RF receive port (RFOUT) is configured to connect the RF transceiver (40) to output the RF signal received to the RF transceiver (40); and
the RF antenna port (ANT) is connected with a transmit/receive port (TRX) of the RF LFEM device (30).

12. The RF transceiving system according to claim 1, wherein the RF LFEM device (30) further comprises a fifth switch unit (340), a plurality of first ends of the fifth switch unit (340) are correspondingly connected with the receive ports (RX), and a plurality of second ends of the fifth switch unit (340) are correspondingly connected with the output ends of the two first receive circuits (310) and the output ends of the two second receive circuits (320).

13. The RF transceiving system according to claim 1, wherein the RF LFEM device (30) further comprises a plurality of fourth filter units (361) respectively connected with the transmit/receive ports (TRX) and the first ends of the first switch unit (330) and configured to filter the RF signal received.

14. A communication device comprising the RF transceiving system according to any of claims 1 to 13.

## Patentansprüche

1. Hochfrequenz-(RF-)Sendeempfangssystem, umfassend:
einen RF-Sendeempfänger (40);
eine Antennengruppe, die eine erste Antenne (Ant1), eine zweite Antenne (Ant2), eine dritte Antenne (Ant3) und eine vierte Antenne (Ant4) umfasst und für RF-Signalübertragung/-empfang konfiguriert ist;
**dadurch gekennzeichnet, dass** es weiter Folgendes umfasst:
eine Vorrichtung (30) für ein RF-Low-Noise-Amplifier, LNA, -Front-End-Modul, LFEM, bereitgestellt mit einer Vielzahl von Sende-/ Empfangsanschlüssen (TRX), einem ersten Antennenanschluss (ANT1), der mit der ersten Antenne (Ant1) verbunden ist, einem zweiten Antennenanschluss (ANT2), der mit der zweiten Antenne (Ant2) verbunden ist, einem dritten Antennenanschluss (ANT3), der mit der dritten Antenne (Ant3) verbunden ist, einen vierten Antennenanschluss (ANT4), der mit der vierten Antenne (Ant4) verbunden ist, und eine Vielzahl von Empfangsanschlüssen (RX), die mit dem RF-Sendeempfänger (40) verbunden sind, wobei die RF-LFEM-Vorrichtung (30) für die Übertragung und den Zweikanalempfang von RF-Signalen in mindestens zwei Frequenzbändern konfiguriert ist;
ein erstes RF-Leistungsverstärkermodul, das Duplexer-, PA-Mid-, Vorrichtung (10) einschließt, die mit dem RF-Sendeempfänger (40) und einem Sende-/Empfangsanschluss (TRX) der RF-LFEM-Vorrichtung (30) verbunden und konfiguriert ist, um ein RF-Signal in einer Vielzahl von Frequenzbändern zu senden/zu empfangen; und
eine zweite RF-PA-Mid-Vorrichtung (20), die mit dem RF-Sendeempfänger (40) und einem Sende-/Empfangsanschluss (TRX) der RF-LFEM-Vorrichtung (30) verbunden und konfiguriert ist, um ein RF-Signal in einer Vielzahl von Frequenzbändern zu senden/zu empfangen;
wobei die RF-LFEM-Vorrichtung (30) mindestens Folgendes umfasst:
zwei erste Empfangsschaltungen (310), wobei jede der zwei ersten Empfangsschaltungen (310) konfiguriert ist, um ein RF-Signal in einem ersten Frequenzband zu empfangen und zu verstärken;
zwei zweite Empfangsschaltungen (320), wobei jede der zwei zweiten Empfangsschaltungen (320) konfiguriert ist, um ein RF-Signal in einem zweiten Frequenzband zu empfangen und zu verstärken, wobei die Ausgangsenden der zwei ersten Empfangsschaltungen (310) und die Ausgangsenden der zwei zweiten Empfangsschaltungen (320) entsprechend mit vier Empfangsanschlüssen (RX) in Eins-zu-Eins-Entsprechung verbunden sind; und
eine erste Umschalteinheit (330), wobei eine Vielzahl erster Enden der ersten Umschalteinheit (330) entsprechend mit Eingangsenden der zwei ersten Empfangsschaltungen (310), Eingangsenden der zwei zweiten Empfangsschaltungen (320) und der Vielzahl von Sende-/ Empfangsanschlüssen (TRX) in Eins-zu-Eins-Entsprechung verbunden sind, und vier zweite Enden der ersten Umschalteinheit (330) entsprechend mit dem ersten Antennenanschluss (ANT1), dem zweiten Antennenanschluss (ANT2), dem dritten Antennenanschluss (ANT3) und dem vierten Antennenanschluss (ANT4) in Eins-zu-Eins-Entsprechung verbunden sind.

2. RF-Sendeempfangssystem nach Anspruch 1, wobei das RF-Signal im ersten Frequenzband und das RF-Signal im zweiten Frequenzband jeweils ein Signal der Mobilkommunikationstechnologie der 5. Generation (5G) im Frequenzband N77 und ein 5G-Signal im Frequenzband N79 sind.

3. RF-Sendeempfangssystem nach Anspruch 1, wobei
die RF-LFEM-Vorrichtung (30) weiter zwei dritte Empfangsschaltungen (370) umfasst, wobei jede der zwei dritten Empfangsschaltungen (370) konfiguriert ist, um ein RF-Signal in einem dritten Frequenzband zu empfangen und zu verstärken, um die RF-LFEM-Vorrichtung (30) in die Lage zu versetzen, einen Zweikanalempfang von RF-Signalen in den drei Frequenzbändern durchzuführen; und
das RF-Sendeempfangssystem weiter ein Sende-/Empfangsauswahlmodul (50) umfasst, das jeweils mit dem RF-Sendeempfänger (40), der RF-LFEM-Vorrichtung (30), der ersten Antenne (Ant1), der zweiten Antenne (Ant2), der dritten Antenne (Ant3) und der vierten Antenne (Ant4) verbunden und für die Sende-/Empfangsauswahl des RF-Signals im dritten Frequenzband konfiguriert ist, um das RF-Sendeempfangssystem in die Lage zu versetzen, eine 4*4-Multiple-Input-Multiple-Output-, MIMO-, Funktion für die RF-Signale in den drei Frequenzbändern zu realisieren.

4. RF-Sendeempfangssystem nach Anspruch 3, wobei
die Anzahl der Vielzahl von Sende-/ Empfangsanschlüssen (TRX) vier ist, die jeweils ein erster Sende-/Empfangsanschluss (TRX1), ein zweiter Sende-/Empfangsanschluss (TRX2), ein dritter Sende-/Empfangsanschluss (TRX3) und ein vierter Sende-/Empfangsanschluss (TRX4) sind;
die erste Umschalteinheit (330) sechs erste Enden umfasst, wobei die sechs ersten Enden der ersten Umschalteinheit (330) entsprechend mit den Eingangsenden der zwei ersten Empfangsschaltungen (310), den Eingangsenden der zwei zweiten Empfangsschaltungen (320), dem ersten Sende-/Empfangsanschluss (TRX1), und dem zweiten Sende-/Empfangsanschluss (TRX2) verbunden sind, wobei der erste Sende-/Empfangsanschluss (TRX1) weiter mit einem RF-Antennenanschluss (ANT) der ersten RF-PA-Mid-Vorrichtung (10) verbunden ist, und der zweite Sende-/Empfangsanschluss (TRX2) weiter mit einem RF-Antennenanschluss (ANT) der zweiten RF-PA-Mid-Vorrichtung (20) verbunden ist; und
der dritte Sende-/Empfangsanschluss (TRX3) und der vierte Sende-/Empfangsanschluss (TRX4) jeweils mit den Eingangsenden der zwei dritten Empfangsschaltungen (370) verbunden sind.

5. RF-Sendeempfangssystem nach Anspruch 4, wobei das Sende-/Empfangsauswahlmodul (50) einen ersten Kombinierer (561), einen zweiten Kombinierer (562), einen dritten Kombinierer (563), einen vierten Kombinierer (564), einen ersten Multiplexschalter (540), einen zweiten Multiplexschalter (550), eine zweite Umschalteinheit (530), eine dritte RF-PA-Mid-Vorrichtung (510) und eine vierte RF-PA-Mid-Vorrichtung (520) umfasst, wobei
jede der dritten RF-PAMid-Vorrichtung (510) und der vierten RF-PA-Mid-Vorrichtung (520) mit einem RF-Antennenanschluss bereitgestellt ist;
ein erstes Ende des ersten Multiplexschalters (540) mit einem Eingangsende einer dritten Empfangsschaltung (370) über den dritten Sende-/Empfangsanschluss (TRX3) verbunden ist, und ein zweites Ende des ersten Multiplexschalters (540) und der zweite Antennenanschluss (ANT2) mit der zweiten Antenne (Ant2) über den zweiten Kombinierer (562) verbunden sind;
ein erstes Ende des zweiten Multiplexschalters (550) mit einem Eingangsende einer anderen dritten Empfangsschaltung (370) über den vierten Sende-/Empfangsanschluss (TRX4) verbunden ist, und ein zweites Ende des zweiten Multiplexschalters (550) und der vierte Antennenanschluss (ANT4) mit der vierten Antenne (Ant4) über den vierten Kombinierer (564) verbunden sind; und
die zweite Umschalteinheit (530) zwei erste Enden und eine Vielzahl von zweiten Enden umfasst, die zwei ersten Enden der zweiten Umschalteinheit (530) entsprechend mit dem RF-Antennenanschluss (ANT) der dritten RF-PA-Mid-Vorrichtung (510) und dem RF-Antennenanschluss (ANT) der vierten RF-PA-Mid-Vorrichtung (520) verbunden sind, zwei zweite Enden der zweiten Umschalteinheit (530) entsprechend mit einem anderen ersten Ende des ersten Multiplexschalters (540) und einem anderen ersten Ende des zweiten Multiplexschalters (550) verbunden sind, ein weiteres zweites Ende der zweiten Umschalteinheit (530) und der erste Antennenanschluss (ANT1) über den ersten Kombinierer (561) mit der ersten Antenne (Ant1) verbunden sind, und ein weiteres zweites Ende der zweiten Umschalteinheit (530) und der dritte Antennenanschluss (ANT3) über den dritten Kombinierer (563) mit der dritten Antenne (Ant3) verbunden sind, wobei
die dritte RF-PA-Mid-Vorrichtung (510) und die vierte RF-PA-Mid-Vorrichtung (520) jeweils weiter mit dem RF-Sendeempfänger (40) verbunden sind und beide konfiguriert sind, um das RF-Signal in dem dritten Frequenzband zu senden/zu empfangen.

6. RF-Sendeempfangssystem nach Anspruch 3, wobei
die RF-LFEM-Vorrichtung (30) weiter mit einem fünften Antennenanschluss (ANT5) und einem sechsten Antennenanschluss (ANT6) bereitgestellt ist, die Anzahl der Vielzahl von Sende-/Empfangsanschlüssen (TRX) drei ist, die jeweils ein erster Sende-/Empfangsanschluss (TRX1), ein zweiter Sende-/Empfangsanschluss (TRX2) und ein dritter Sende-/Empfangsanschluss (TRX3) sind, wobei der erste Sende-/Empfangsanschluss (TRX1) mit einem RF-Antennenanschluss (ANT) der ersten RF-PA-Mid-Vorrichtung (10) verbunden ist, und der zweite Sende-/Empfangsanschluss (TRX2) mit einem RF-Antennenanschluss (ANT) der zweiten RF-PA-Mid-Vorrichtung (20) verbunden ist; und
die RF-LFEM-Vorrichtung (30) weiter eine dritte Umschalteinheit umfasst, umfassend drei erste Enden und zwei zweite Enden, wobei die drei ersten Enden der dritten Umschalteinheit entsprechend mit Eingangsenden der zwei dritten Empfangsschaltungen (370) und dem dritten Sende-/Empfangsanschluss (TRX3) verbunden sind, und die zwei zweiten Enden der dritten Umschalteinheit jeweils mit dem fünften Antennenanschluss (ANT5) und dem sechsten Antennenanschluss (ANT6) verbunden sind.

7. RF-Sendeempfangssystem nach Anspruch 6, wobei das Sende-/Empfangsauswahlmodul (50) einen ersten Kombinierer (561), einen zweiten Kombinierer (562), einen dritten Kombinierer (563), einen vierten Kombinierer (564), eine vierte Umschalteinheit (570), eine dritte RF-PA-Mid-Vorrichtung (510) und eine vierte RF-PA-Mid-Vorrichtung (520) umfasst, wobei
jede der dritten RF-PAMid-Vorrichtung (510) und der vierten RF-PA-Mid-Vorrichtung (520) mit einem RF-Antennenanschluss bereitgestellt ist;
die vierte Umschalteinheit (570) zwei erste Enden und drei zweite Enden umfasst, die zwei ersten Enden der vierten Umschalteinheit (570) entsprechend mit dem RF-Antennenanschluss (ANT) der dritten RF-PA-Mid-Vorrichtung (510) und dem RF-Antennenanschluss (ANT) der vierten RF-PA- Mid-Vorrichtung (520) verbunden sind, ein zweites Ende der vierten Umschalteinheit (570) mit dem dritten Sende/Empfangsanschluss (TRX3) verbunden ist, ein anderes zweites Ende der vierten Umschalteinheit (570) und der erste Antennenanschluss (ANT1) mit der ersten Antenne (Ant1) über den ersten Kombinierer (561) verbunden sind, und ein weiteres zweites Ende der vierten Umschalteinheit (570) und der dritte Antennenanschluss (ANT3) mit der dritten Antenne (Ant3) über den dritten Kombinierer (563) verbunden sind; und
wobei der fünfte Antennenanschluss (ANT5) und der zweite Antennenanschluss (ANT2) der RF-LFEM-Vorrichtung (30) mit der zweiten Antenne (Ant2) über den zweiten Kombinierer (562) verbunden sind, und der sechste Antennenanschluss (ANT6) und der vierte Antennenanschluss (ANT4) mit der vierten Antenne (Ant4) über den vierten Kombinierer (564) verbunden sind, wobei die dritte RF-PA-Mid-Vorrichtung (510) und die vierte RF-PA-Mid-Vorrichtung (520) weiter jeweils mit dem RF-Sendeempfänger (40) verbunden sind und beide konfiguriert sind, um das RF-Signal in dem dritten Frequenzband zu senden/zu empfangen.

8. RF-Sendeempfangssystem nach Anspruch 3, wobei die RF-LFEM-Vorrichtung (30) mit vier Sende-/ Empfangsanschlüssen (TRX) bereitgestellt ist, die jeweils ein erster Sende-/ Empfangsanschluss (TRX1), ein zweiter Sende-/ Empfangsanschluss (TRX2), ein dritter Sende-/ Empfangsanschluss (TRX3) und ein vierter Sende-/ Empfangsanschluss (TRX4) sind; und
die erste Umschalteinheit (330) zehn erste Enden umfasst, die entsprechend mit den Eingangsenden der zwei ersten Empfangsschaltungen (310), den Eingangsenden der zwei zweiten Empfangsschaltungen (320), den Eingangsenden der zwei dritten Empfangsschaltungen (370), dem ersten Sende-/Empfangsanschluss (TRX1), dem zweiten Sende-/Empfangsanschluss (TRX2), dem dritten Sende-/Empfangsanschluss (TRX3) und dem vierten Sende-/Empfangsanschluss (TRX4) verbunden sind, wobei der dritte Sende-/Empfangsanschluss (TRX3) und der vierte Sende-/Empfangsanschluss (TRX4) weiter mit dem Sende-/Empfangsauswahlmodul (50) verbunden sind.

9. RF-Sendeempfangssystem nach Anspruch 8, wobei das Sende-/Empfangsauswahlmodul (50) umfasst:
eine dritte RF-PA-Mid-Vorrichtung (510), die mit einem RF-Antennenanschluss bereitgestellt ist, wobei der RF-Antennenanschluss (ANT) der dritten RF-PA-Mid-Vorrichtung (510) mit dem dritten Sende-/Empfangsanschluss (TRX3) verbunden ist, und die dritte RF-PA-Mid-Vorrichtung (510) weiter mit dem RF-Sendeempfänger (40) verbunden und konfiguriert ist, um das RF-Signal in dem dritten Frequenzband zu senden/zu empfangen; und
eine vierte RF-PA-Mid-Vorrichtung (520), die mit einem RF-Antennenanschluss bereitgestellt ist, wobei der RF-Antennenanschluss (ANT) der vierten RF-PA-Mid-Vorrichtung (520) mit dem vierten Sende-/Empfangsanschluss (TRX4) verbunden und konfiguriert ist, um das RF-Signal in dem dritten Frequenzband zu senden/zu empfangen.

10. RF-Sendeempfangssystem nach Anspruch 3, wobei das RF-Signal im dritten Frequenzband ein 5G-Signal im Frequenzband N41 ist.

11. RF-Sendeempfangssystem nach Anspruch 1, wobei jede der ersten RF-PA-Mid-Vorrichtung (10) und der zweiten RF-PA-Mid-Vorrichtung (20) mit einem RF-Sendeanschluss (RFIN), einem RF-Empfangsanschluss (RFOUT) und einem RF-Antennenanschluss (ANT) bereitgestellt ist, wobei
der RF-Sendeanschluss (RFIN) konfiguriert ist, um den RF-Sendeempfänger (40) zu verbinden, um ein von dem RF-Sendeempfänger (40) gesendetes RF-Signal zu empfangen;
der RF-Empfangsanschluss (RFOUT) konfiguriert ist, um den RF-Sendeempfänger (40) zu verbinden, um das empfangene RF-Signal an den RF-Sendeempfänger (40) auszugeben; und
der RF-Antennenanschluss (ANT) mit einem Sende-/Empfangsanschluss (TRX) der RF-LFEM-Vorrichtung (30) verbunden ist.

12. RF-Sendeempfangssystem nach Anspruch 1, wobei die RF-LFEM-Vorrichtung (30) weiter eine fünfte Umschalteinheit (340) umfasst, eine Vielzahl von ersten Enden der fünften Umschalteinheit (340) entsprechend mit den Empfangsanschlüssen (RX) verbunden sind, und eine Vielzahl von zweiten Enden der fünften Umschalteinheit (340) entsprechend mit den Ausgangsenden der zwei ersten Empfangsschaltungen (310) und den Ausgangsenden der zwei zweiten Empfangsschaltungen (320) verbunden sind.

13. RF-Sendeempfangssystem nach Anspruch 1, wobei die RF-LFEM-Vorrichtung (30) weiter eine Vielzahl von vierten Filtereinheiten (361) umfasst, die jeweils mit den Sende-/Empfangsanschlüssen (TRX) und den ersten Enden der ersten Umschalteinheit (330) verbunden und konfiguriert sind, um das empfangene RF-Signal zu filtern.

14. Kommunikationsvorrichtung, umfassend das RF-Sendeempfangssystem nach einem der Ansprüche 1 bis 13.

## Revendications

1. Système d'émission-réception radiofréquence (RF), comprenant :
un émetteur-récepteur RF (40) ;
un groupe d'antennes, comprenant une première antenne (Ant1), une deuxième antenne (Ant2), une troisième antenne (Ant3) et une quatrième antenne (Ant4), et configuré pour l'émission/réception de signaux RF ;
**caractérisé en ce qu'**il comprend en outre :
un dispositif RF de module frontal d'amplificateur à faible bruit, LNA, LFEM (30) doté d'une pluralité de ports d'émission/réception (TRX), d'un premier port d'antenne (ANT1) connecté à la première antenne (Ant1), d'un deuxième port d'antenne (ANT2) connecté à la deuxième antenne (Ant2), d'un troisième port d'antenne (ANT3) connecté à la troisième antenne (Ant3), d'un quatrième port d'antenne (ANT4) connecté à la quatrième antenne (Ant4), et d'une pluralité de ports de réception (RX) connectés à l'émetteur-récepteur RF (40), dans lequel le dispositif RF LFEM (30) est configuré pour la transmission et la réception à double canal de signaux RF dans au moins deux bandes de fréquences ;
un premier module d'amplificateur de puissance RF incluant des duplexeurs, un dispositif PA Mid (10) connecté à l'émetteur-récepteur RF (40) et à un port d'émission/réception (TRX) du dispositif RF LFEM (30), et configuré pour émettre/recevoir un signal RF dans une pluralité de bandes de fréquences ; et
un deuxième dispositif RF PA Mid (20) connecté à l'émetteur-récepteur RF (40) et à un port d'émission/réception (TRX) du dispositif RF LFEM (30), et configuré pour émettre/recevoir un signal RF dans une pluralité de bandes de fréquences ;
dans lequel le dispositif RF LFEM (30) comprend au moins :
deux premiers circuits de réception (310), chacun des deux premiers circuits de réception (310) est configuré pour recevoir et amplifier un signal RF dans une première bande de fréquences ;
deux deuxièmes circuits de réception (320), chacun des deux deuxièmes circuits de réception (320) est configuré pour recevoir et amplifier un signal RF dans une deuxième bande de fréquences, dans lequel les extrémités de sortie des deux premiers circuits de réception (310) et les extrémités de sortie des deux deuxièmes circuits de réception (320) sont connectées de manière correspondante à quatre ports de réception (RX) en correspondance un à un ; et
une première unité de commutation (330), une pluralité de premières extrémités de la première unité de commutation (330) sont connectées de manière correspondante aux extrémités d'entrée des deux premiers circuits de réception (310), aux extrémités d'entrée des deux deuxièmes circuits de réception (320) et à la pluralité de ports d'émission/réception (TRX) en correspondance un à un, et quatre deuxièmes extrémités de la première unité de commutation (330) sont connectées de manière correspondante au premier port d'antenne (ANT1), au deuxième port d'antenne (ANT2), au troisième port d'antenne (ANT3) et au quatrième port d'antenne (ANT4).

2. Système d'émission-réception RF selon la revendication 1, dans lequel le signal RF dans la première bande de fréquences et le signal RF dans la deuxième bande de fréquences sont respectivement un signal de technologie de communication mobile de 5e génération (5G) dans la bande de fréquences N77 et un signal 5G dans la bande de fréquences N79.

3. Système d'émission-réception RF selon la revendication 1, dans lequel
le dispositif RF LFEM (30) comprend en outre deux troisièmes circuits de réception (370), chacun des deux troisièmes circuits de réception (370) est configuré pour recevoir et amplifier un signal RF dans une troisième bande de fréquences, pour permettre au dispositif RF LFEM (30) d'effectuer une réception à double canal de signaux RF dans les trois bandes de fréquences ; et
le système d'émission-réception RF comprend en outre un module de sélection d'émission/réception (50) connecté respectivement à l'émetteur-récepteur RF (40), au dispositif RF LFEM (30), à la première antenne (Ant1), à la deuxième antenne (Ant2), à la troisième antenne (Ant3) et à la quatrième antenne (Ant4), et configuré pour la sélection d'émission/réception du signal RF dans la troisième bande de fréquences, pour permettre au système d'émission-réception RF de réaliser une fonction à entrées multiples et sorties multiples MIMO 4*4 pour les signaux RF dans les trois bandes de fréquences.

4. Système d'émission-réception RF selon la revendication 3, dans lequel
le nombre de la pluralité de ports d'émission/réception (TRX) est de quatre, à savoir un premier port d'émission/réception (TRX1), un deuxième port d'émission/réception (TRX2), un troisième port d'émission/réception (TRX3) et un quatrième port d'émission/réception (TRX4) respectivement ;
la première unité de commutation (330) comprend six premières extrémités, les six premières extrémités de la première unité de commutation (330) sont connectées de manière correspondante aux extrémités d'entrée des deux premiers circuits de réception (310), aux extrémités d'entrée des deux deuxièmes circuits de réception (320), au premier port d'émission/réception (TRX1) et au deuxième port d'émission/réception (TRX2), dans lequel le premier port d'émission/réception (TRX1) est en outre connecté à un port d'antenne RF (ANT) du premier dispositif RF PA Mid (10), et le deuxième port d'émission/réception (TRX2) est en outre connecté à un port d'antenne RF (ANT) du deuxième dispositif RF PA Mid (20) ; et
le troisième port d'émission/réception (TRX3) et le quatrième port d'émission/réception (TRX4) sont respectivement connectés aux extrémités d'entrée des deux troisièmes circuits de réception (370).

5. Système d'émission-réception RF selon la revendication 4, dans lequel le module de sélection d'émission/réception (50) comprend un premier combinateur (561), un deuxième combinateur (562), un troisième combinateur (563), un quatrième combinateur (564), un premier commutateur de multiplexage (540), un deuxième commutateur de multiplexage (550), une deuxième unité de commutation (530), un troisième dispositif RF PA Mid (510) et un quatrième dispositif RF PA Mid (520), dans lequel
chacun du troisième dispositif RF PA Mid (510) et du quatrième dispositif RF PA Mid ( 520) est doté d'un port d'antenne RF ;
une première extrémité du premier commutateur de multiplexage (540) est connectée à une extrémité d'entrée d'un troisième circuit de réception (370) par l'intermédiaire du troisième port d'émission/réception (TRX3), et une deuxième extrémité du premier commutateur de multiplexage (540) et le deuxième port d'antenne (ANT2) sont connectés à la deuxième antenne (Ant2) par l'intermédiaire du deuxième combinateur (562) ;
une première extrémité du deuxième commutateur de multiplexage (550) est connectée à une extrémité d'entrée d'un autre troisième circuit de réception (370) par l'intermédiaire du quatrième port d'émission/réception (TRX4), et une deuxième extrémité du deuxième commutateur de multiplexage (550) et le quatrième port d'antenne (ANT4) sont connectés à la quatrième antenne (Ant4) par l'intermédiaire du quatrième combinateur (564) ; et
la deuxième unité de commutation (530) comprend deux premières extrémités et une pluralité de secondes extrémités, les deux premières extrémités de la deuxième unité de commutation (530) sont respectivement connectées au port d'antenne RF (ANT) du troisième dispositif RF PA Mid (510) et au port d'antenne RF (ANT) du quatrième dispositif RF PA Mid (520), deux secondes extrémités de la deuxième unité de commutation (530) sont connectées de manière correspondante à une autre première extrémité du premier commutateur de multiplexage (540) et à une autre première extrémité du deuxième commutateur de multiplexage (550), une autre seconde extrémité de la deuxième unité de commutation (530) et le premier port d'antenne (ANT1) sont connectés à la première antenne (Ant1) par l'intermédiaire du premier combinateur (561), et encore une autre seconde extrémité de la deuxième unité de commutation (530) et le troisième port d'antenne (ANT3) sont connectés à la troisième antenne (Ant3) par l'intermédiaire du troisième combinateur (563), dans lequel
le troisième dispositif RF PA Mid (510) et le quatrième dispositif RF PA Mid (520) sont en outre respectivement connectés à l'émetteur-récepteur RF (40) et tous deux configurés pour émettre/recevoir le signal RF dans la troisième bande de fréquences.

6. Système d'émission-réception RF selon la revendication 3, dans lequel
le dispositif RF LFEM (30) est en outre doté d'un cinquième port d'antenne (ANT5) et d'un sixième port d'antenne (ANT6), le nombre de la pluralité de ports d'émission/réception (TRX) est de trois, à savoir un premier port d'émission/réception (TRX1), un deuxième port d'émission/réception (TRX2) et un troisième port d'émission/réception (TRX3) respectivement, dans lequel le premier port d'émission/réception (TRX1) est connecté à un port d'antenne RF (ANT) du premier dispositif RF PA Mid (10) et le deuxième port d'émission/réception (TRX2) est connecté à un port d'antenne RF (ANT) du deuxième dispositif RF PA Mid (20) ; et
le dispositif RF LFEM (30) comprend en outre une troisième unité de commutation comprenant trois premières extrémités et deux secondes extrémités, les trois premières extrémités de la troisième unité de commutation sont connectées de manière correspondante aux extrémités d'entrée des deux troisièmes circuits de réception (370) et au troisième port d'émission/réception (TRX3), et les deux secondes extrémités de la troisième unité de commutation sont respectivement connectées au cinquième port d'antenne (ANT5) et au sixième port d'antenne (ANT6).

7. Système d'émission-réception RF selon la revendication 6, dans lequel le module de sélection d'émission/réception (50) comprend un premier combinateur (561), un deuxième combinateur (562), un troisième combinateur (563), un quatrième combinateur (564), une quatrième unité de commutation (570), un troisième dispositif RF PA Mid (510) et un quatrième dispositif RF PA Mid (520), dans lequel
chacun du troisième dispositif RF PA Mid (510) et du quatrième dispositif RF PA Mid (520) est doté d'un port d'antenne RF ;
la quatrième unité de commutation (570) comprend deux premières extrémités et trois secondes extrémités, les deux premières extrémités de la quatrième unité de commutation (570) sont connectées de manière correspondante au port d'antenne RF (ANT) du troisième dispositif RF PA Mid (510) et au port d'antenne RF (ANT) du quatrième dispositif RF PA Mid (520), une seconde extrémité de la quatrième unité de commutation (570) est connectée au troisième port d'émission/réception (TRX3), une autre seconde extrémité de la quatrième unité de commutation (570) et le premier port d'antenne (ANT1) sont connectés à la première antenne (Ant1) par l'intermédiaire du premier combinateur (561), et encore une autre seconde extrémité de la quatrième unité de commutation (570) et le troisième port d'antenne (ANT3) sont connectés à la troisième antenne (Ant3) par l'intermédiaire du troisième combinateur (563) ; et
le cinquième port d'antenne (ANT5) et le deuxième port d'antenne (ANT2) du dispositif RF LFEM (30) sont connectés à la deuxième antenne (Ant2) par l'intermédiaire du deuxième combinateur (562), et le sixième port d'antenne (ANT6) et le quatrième port d'antenne (ANT4) sont connectés à la quatrième antenne (Ant4) par l'intermédiaire du quatrième combinateur (564), dans lequel le troisième dispositif RF PA Mid (510) et le quatrième dispositif RF PA Mid (520) sont en outre connectés respectivement à l'émetteur-récepteur RF (40) et tous deux configurés pour émettre/recevoir le signal RF dans la troisième bande de fréquences.

8. Système d'émission-réception RF selon la revendication 3, dans lequel le dispositif RF LFEM (30) est doté de quatre ports d'émission/réception (TRX), à savoir un premier port d'émission/réception (TRX1), un deuxième port d'émission/réception (TRX2), un troisième port d'émission/réception (TRX3) et un quatrième port d'émission/réception (TRX4) respectivement ; et
la première unité de commutation (330) comprend dix premières extrémités connectées de manière correspondante aux extrémités d'entrée des deux premiers circuits de réception (310), aux extrémités d'entrée des deux deuxièmes circuits de réception (320), aux extrémités d'entrée des deux troisièmes circuits de réception (370), au premier port d'émission/réception (TRX1), au deuxième port d'émission/réception (TRX2), au troisième port d'émission/réception (TRX3) et au quatrième port d'émission/réception (TRX4), dans lequel le troisième port d'émission/réception (TRX3) et le quatrième port d'émission/réception (TRX4) sont en outre connectés au module de sélection d'émission/réception (50).

9. Système d'émission-réception RF selon la revendication 8, dans lequel le module de sélection d'émission/réception (50) comprend :
un troisième dispositif RF PA Mid (510) doté d'un port d'antenne RF, le port d'antenne RF (ANT) du troisième dispositif RF PA Mid (510) est connecté au troisième port d'émission/réception (TRX3), et le troisième dispositif RF PA Mid (510) est en outre connecté à l'émetteur-récepteur RF (40) et configuré pour émettre/recevoir le signal RF dans la troisième bande de fréquences ; et
un quatrième dispositif RF PA Mid (520) doté d'un port d'antenne RF, le port d'antenne RF (ANT) du quatrième dispositif RF PA Mid (520) est connecté au quatrième port d'émission/réception (TRX4) et configuré pour émettre/recevoir le signal RF dans la troisième bande de fréquences.

10. Système d'émission-réception RF selon la revendication 3, le signal RF dans la troisième bande de fréquences est un signal 5G dans la bande de fréquences N41.

11. Système d'émission-réception RF selon la revendication 1, dans lequel chacun du premier dispositif RF PA Mid (10) et du deuxième dispositif RF PA Mid (20) est doté d'un port d'émission RF (RFIN), d'un port de réception RF (RFOUT) et d'un port d'antenne RF (ANT), dans lequel
le port d'émission RF (RFIN) est configuré pour connecter l'émetteur-récepteur RF (40) pour recevoir un signal RF émis par l'émetteur-récepteur RF (40) ;
Le port de réception RF (RFOUT) est configuré pour connecter l'émetteur-récepteur RF (40) pour délivrer en sortie le signal RF reçu à l'émetteur-récepteur RF (40) ; et
le port d'antenne RF (ANT) est connecté à un port d'émission/réception (TRX) du dispositif RF LFEM (30).

12. Système d'émission-réception RF selon la revendication 1, dans lequel le dispositif RF LFEM (30) comprend en outre une cinquième unité de commutation (340), une pluralité de premières extrémités de la cinquième unité de commutation (340) sont connectées de manière correspondante aux ports de réception (RX), et une pluralité de secondes extrémités de la cinquième unité de commutation (340) sont connectées de manière correspondante aux extrémités de sortie des deux premiers circuits de réception (310) et aux extrémités de sortie des deux deuxièmes circuits de réception (320).

13. Système d'émission-réception RF selon la revendication 1, dans lequel le dispositif RF LFEM (30) comprend en outre une pluralité de quatrièmes unités de filtrage (361) connectées respectivement aux ports d'émission/réception (TRX) et aux premières extrémités de la première unité de commutation (330) et configurées pour filtrer le signal RF reçu.

14. Dispositif de communication comprenant le système d'émission-réception RF selon l'une quelconque des revendications 1 à 13.
